# EUROPEAN PATENT APPLICATION

(11) **EP 4 648 124 A1**
(43) Date of publication of application: **12.11.2025**
(21) Application number: 25175517.9
(22) Date of filing: 09.05.2025
(51) Int. Cl.: H01M 4/134, H01M 4/38, H01M 4/587, H01M 10/0525, H01M 10/0567, H01M 10/0568, H01M 10/0569

(54) **SECONDARY BATTERY AND ELECTRONIC DEVICE**

(30) Priority: 10.05.2024 CN 202410574921
(71) Applicant: Ningde Amperex Technology Ltd., Ningde City, Fujian Province 352100 (CN)
(72) Inventor: LI, Fangru, Ningde City, Fujian Province, 352100 (CN)
(74) Representative: Icosa

(57) **Abstract**

A secondary battery includes a negative electrode, a positive electrode, and an electrolyte, where the negative electrode includes a negative electrode current collector and a negative electrode mixture layer disposed on at least one surface of the negative electrode current collector. A thickness of the negative electrode mixture layer is T µm, the negative electrode mixture layer contains carbon nanotubes and silicon-based particles, an average particle size of the silicon-based particles is D µm, and 3.7 ≤ 10T/D² ≤ 24.9. The electrolyte includes a dinitrile compound and a trinitrile compound.

## Description

### TECHNICAL FIELD

This application pertains to the field of energy storage technologies, and specifically relates to a secondary battery and an electronic device.

### BACKGROUND

To meet the requirements of sustainable development, secondary batteries provide clean energy storage and usage solutions. With the continuous development of application scenarios, the requirements on the performance of secondary batteries are also increasingly high, especially the requirements on the energy density of secondary batteries. Since the theoretical capacity of a silicon material is approximately ten times that of a graphite material, replacing the graphite material entirely or partially with the silicon material can significantly increase the energy density of secondary batteries. However, during the use of secondary batteries, the silicon material undergoes significant shrinkage and expansion with the intercalation and deintercalation of metal ions, leading to a noticeable deterioration in the cycling performance of the secondary batteries. Therefore, it is necessary to develop a silicon-containing secondary battery to achieve both high energy density and cycling performance of the secondary battery.

### SUMMARY

This application is intended to provide a secondary battery and an electronic device. The secondary battery achieves a high energy density and also has a reduced high-temperature intermittent cycle resistance increase rate and fast-charge cycle resistance increase rate.

According to a first aspect, this application provides a secondary battery. The secondary battery includes a negative electrode, a positive electrode, and an electrolyte, where the negative electrode includes a negative electrode current collector and a negative electrode mixture layer disposed on at least one surface of the negative electrode current collector; the negative electrode mixture layer contains carbon nanotubes and silicon-based particles; a thickness of the negative electrode mixture layer is T µm, an average particle size of the silicon-based particles is D µm, and 3.7 ≤ 10T/D² ≤ 24.9; and the electrolyte includes a dinitrile compound and a trinitrile compound. The secondary battery provided in this application achieves a high energy density and also has a reduced high-temperature intermittent cycle resistance increase rate and fast-charge cycle resistance increase rate.

The inventors have found that secondary batteries containing silicon-based particles exhibit a significant increase in resistivity after experiencing high-temperature intermittent cycle and fast-charge cycle. Through the above settings, the secondary battery can achieve a high energy density and also have a reduced high-temperature intermittent cycle resistance increase rate and fast-charge cycle resistance increase rate. The inventors have speculated that during a high-temperature intermittent cycle and fast-charge cycle process, the silicon-based particles undergo significant expansion and shrinkage in volume, causing the carbon nanotubes to move along with the expansion of the silicon-based particles. Such movement cannot fully restore with the shrinkage of the silicon-based particles, leading to a disconnection in a conductive network path in the negative electrode mixture layer and an increase in resistivity. The thickness T µm of the negative electrode mixture layer and the average particle size D µm of the silicon-based particles jointly affect a distribution state and movable space of the carbon nanotubes in the negative electrode mixture layer. Cyano groups in the dinitrile compound and trinitrile compound have low reaction steric hindrance and high nucleophilic nucleophilicity. When the dinitrile compound and trinitrile compound containing the cyano groups participate in the generation of a solid electrolyte interface film (SEI film) on the surfaces of the silicon-based particles, the generated solid electrolyte interface film has a special adsorption capability of adsorbing the carbon nanotubes, reducing the possibility of the disconnection in the conductive network path in the negative electrode due to the volume change of the silicon-based particles. The thickness T µm of the negative electrode mixture layer and the average particle size D µm of the silicon-based particles are controlled to satisfy: 3.7 ≤ 10T/D² ≤ 24.9, and the electrolyte includes the dinitrile compound and the trinitrile compound, allowing the secondary battery to achieve a high energy density and also have the reduced high-temperature intermittent cycle resistance increase rate and fast-charge cycle resistance increase rate.

In some embodiments, the dinitrile compound includes at least one selected from the group consisting of malononitrile, succinonitrile, glutaronitrile, adiponitrile, pimelonitrile, suberonitrile, 3,3'-oxydipropionitrile, hex-2-enedinitrile, fumaronitrile, 2-pentenedinitrile, methylglutaronitrile, (Z)-but-2-enedinitrile, 2,2,3,3-tetrafluorosuccinonitrile, and 1,2-bis(2-cyanoethoxy)ethane; and/or the trinitrile compound includes at least one selected from the group consisting of 1,3,6-hexanetricarbonitrile, 1,3,5-pentanetricarbonitrile, 4-(2-cyanoethyl)heptanedinitrile, and 1,2,3-tris(2-cyanoethoxy)propane. The dinitrile compound is adjusted to include at least one of the above types of substances and/or the trinitrile compound is adjusted to include at least one of the above types of substances, the high-temperature intermittent cycle resistance increase rate and fast-charge cycle resistance increase rate of the secondary battery can be reduced.

In some embodiments, the dinitrile compound includes at least two selected from the group consisting of malononitrile, succinonitrile, glutaronitrile, adiponitrile, pimelonitrile, suberonitrile, 3,3'-oxydipropionitrile, hex-2-enedinitrile, fumaronitrile, 2-pentenedinitrile, methylglutaronitrile, (Z)-but-2-enedinitrile, 2,2,3,3-tetrafluorosuccinonitrile, and 1,2-bis(2-cyanoethoxy)ethane; and/or the trinitrile compound includes at least two selected from the group consisting of 1,3,6-hexanetricarbonitrile, 1,3,5-pentanetricarbonitrile, 4-(2-cyanoethyl)heptanedinitrile, and 1,2,3-tris(2-cyanoethoxy)propane. The dinitrile compound is adjusted to include at least two of the above types of substances and/or the trinitrile compound is adjusted to include at least two of the above types of substances, so that the high-temperature intermittent cycle resistance increase rate and fast-charge cycle resistance increase rate of the secondary battery can be further reduced.

In some embodiments, based on a mass of the electrolyte, a mass percentage of the dinitrile compound is N₁%, a mass percentage of the trinitrile compound is N₂%, and 1.1 ≤ N₁/N₂ ≤ 4.9. Adjusting the value of N₁/N₂ within the above range can reduce the possibility of the disconnection in the conductive network path in the negative electrode due to the volume change of the silicon-based particles can be reduced, and reduce the high-temperature intermittent cycle resistance increase rate and fast-charge cycle resistance increase rate of the secondary battery. Optionally, 2.2 ≤ N₁/N₂ ≤ 3.7.

In some embodiments, based on a mass of the electrolyte, the electrolyte satisfies at least one of the following: (1) 7.0 ≤ 10T/D² ≤ 18.1; (2) 60 ≤ T ≤ 122; (3) 7.0 ≤ D ≤ 12.7; (4) 3.2 ≤ N₁ ≤ 6.8; or (5) 1.4 ≤ N₂ ≤ 2.9. Allowing the electrolyte to satisfy at least one of the above conditions can reduce the high-temperature intermittent cycle resistance increase rate and fast-charge cycle resistance increase rate of the secondary battery. Optionally, the electrolyte satisfies at least one of the following: 78.2 ≤ T ≤ 113.0; 7.6 ≤ D ≤ 10.6; 4.2 ≤ N₁ ≤ 5.9; or 1.6 ≤ N₂ ≤ 2.5.

In some embodiments, based on a mass of the electrolyte, the electrolyte satisfies at least one of the following: (1) the electrolyte includes succinonitrile and adiponitrile, where based on a mass of the electrolyte, a mass percentage of the succinonitrile is A₁%, a mass percentage of the adiponitrile is A₂%, and 1.27 ≤ A₁/A₂ ≤ 3.36; or (2) the electrolyte includes 1,2-bis(2-cyanoethoxy)ethane and 1,3,6-hexanetricarbonitrile, where based on a mass of the electrolyte, a mass percentage of the 1,2-bis(2-cyanoethoxy)ethane is B₁%, a mass percentage of 1,3,6-hexanetricarbonitrile is B₂%, and 0.83 ≤ B₁/B₂ ≤ 2.43. Allowing the electrolyte to satisfy at least one of the above conditions can reduce the possibility of the disconnection in the conductive network path in the negative electrode due to the volume change of the silicon-based particles, and reduce the high-temperature intermittent cycle resistance increase rate and fast-charge cycle resistance increase rate of the secondary battery. Optionally, the electrolyte satisfies at least one of the following: 1.84 ≤ A₁/A₂ ≤ 2.91; or 1.36 ≤ B₁/B₂ ≤ 2.00.

In some embodiments, the electrolyte satisfies at least one of the following: (1) 2.8 ≤ A₁ ≤ 3.7; (2) 1.1 ≤ A₂ ≤ 2.2; (3) 1.0 ≤ B₁ ≤ 1.7; or (4) 0.7 ≤ B₂ ≤ 1.2. Adjusting the mass percentages of succinonitrile, adiponitrile, 1,2-bis(2-cyanoethoxy)ethane, and/or 1,3,6-hexanetricarbonitrile in the electrolyte to satisfy the above ranges respectively can further reduce the high-temperature intermittent cycle resistance increase rate and fast-charge cycle resistance increase rate of the secondary battery.

In some embodiments, the electrolyte includes ethylene carbonate and propylene carbonate, where based on a mass of the electrolyte, a mass percentage of the ethylene carbonate is X₁%, and a mass percentage of the propylene carbonate is X₂%; and the electrolyte satisfies at least one of the following: (1) 29 ≤ X₁ + X₂ ≤ 51; or (2) 1.1 ≤ X₂/X₁ ≤ 2.5. Allowing the electrolyte to satisfy at least one of the above conditions can reduce the high-temperature intermittent cycle resistance increase rate and fast-charge cycle resistance increase rate of the secondary battery. Optionally, the electrolyte satisfies at least one of the following: 34 ≤ X₁ + X₂ ≤ 46; or 1.6 ≤ X₂/X₁ ≤ 2.2.

In some embodiments, the electrolyte includes ethyl propionate and propyl propionate, where based on a mass of the electrolyte, a mass percentage of the ethyl propionate is Y₁%, and a mass percentage of the propyl propionate is Y₂%; and the electrolyte satisfies at least one of the following: (1) 35 ≤ Y₁ + Y₂ ≤ 62; or (2) 1.2 ≤ Y₂/Y₁ ≤ 2.9. Allowing the electrolyte to satisfy at least one of the above conditions can reduce the high-temperature intermittent cycle resistance increase rate and fast-charge cycle resistance increase rate of the secondary battery. Optionally, the electrolyte satisfies at least one of the following: 41 ≤ Y₁ + Y₂ ≤ 55; or 1.5 ≤ Y_{2/}Y₁ ≤ 2.5.

In some embodiments, the electrolyte includes a fluorine-containing compound, and the fluorine-containing compound includes at least one of fluorobenzene or fluoroethylene carbonate; and based on a mass of the electrolyte, the electrolyte satisfies at least one of the following: (1) a mass percentage of the fluorobenzene is F₁%, where 0.9 ≤ F₁ ≤ 4.1; or (2) a mass percentage of the fluoroethylene carbonate is F₂%, where 10.5 ≤ F₂ ≤ 19.5. Allowing the electrolyte to satisfy at least one of the above conditions can improve the carbon nanotube adsorption capability of the generated solid electrolyte interface film and reduce the high-temperature intermittent cycle resistance increase rate and fast-charge cycle resistance increase rate of the secondary battery. Optionally, the electrolyte satisfies at least one of the following: 2.7 ≤ F₁ ≤ 3.4; or 12.5 ≤ F₂ ≤ 17.5.

In some embodiments, the electrolyte includes a compound of formula I, where based on a mass of the electrolyte, a mass percentage of the compound of formula I is H%, where 0.2 ≤ H ≤ 0.9. Allowing the electrolyte to include the compound of formula I and adjusting the value of H within the above range can improve the elasticity and carbon nanotube adsorption capability of the solid electrolyte interface film, and further reduce the high-temperature intermittent cycle resistance increase rate and fast-charge cycle resistance increase rate.

A chemical formula of the compound of formula I is as follows:

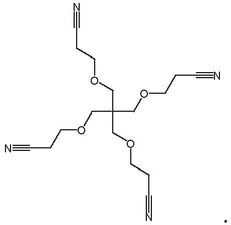

In some embodiments, the electrolyte includes a compound of formula II, where based on a mass of the electrolyte, a mass percentage of the compound of formula II is G%, where 0.2 ≤ G ≤ 0.7. Adjusting the value of H within the above range can improve the elasticity and carbon nanotube adsorption capability of the solid electrolyte interface film, and further reduce the high-temperature intermittent cycle resistance increase rate and fast-charge cycle resistance increase rate.

A chemical formula of the compound of formula II is as follows:

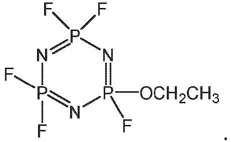

In some embodiments, the silicon-based particle includes a carbon skeleton and a protective layer located on at least a portion of a surface of the carbon skeleton, a material of the protective layer includes amorphous carbon, and a material of the carbon skeleton includes at least one selected from the group consisting of artificial graphite, natural graphite, mesocarbon microbeads, soft carbon, and hard carbon.

According to a second aspect, this application provides an electronic device including the secondary battery according to the first aspect of this application. The electronic device according to the second aspect of this application achieves a high energy density and also has a reduced high-temperature intermittent cycle resistance increase rate and fast-charge cycle resistance increase rate.

Additional aspects and advantages of some embodiments of this application are partly described and presented in subsequent descriptions, or explained by implementation of these embodiments of this application.

### DESCRIPTION OF EMBODIMENTS

Some embodiments of this application are described in detail below. Some embodiments of this application should not be construed as any limitation on this application.

Unless otherwise expressly specified, the following terms used in this specification have the meanings described below.

According to a first aspect, this application provides a secondary battery. The secondary battery includes a negative electrode, a positive electrode, and an electrolyte, where the negative electrode includes a negative electrode current collector and a negative electrode mixture layer disposed on at least one surface of the negative electrode current collector. The negative electrode mixture layer contains carbon nanotubes and silicon-based particles. A thickness of the negative electrode mixture layer is T µm, an average particle size of the silicon-based particles is D µm, and 3.7 ≤ 10T/D² ≤ 24.9. The electrolyte includes a dinitrile compound and a trinitrile compound. The secondary battery provided in this application achieves a high energy density and also has a reduced high-temperature intermittent cycle resistance increase rate and fast-charge cycle resistance increase rate.

### Negative electrode

The negative electrode includes a negative electrode current collector and a negative electrode mixture layer disposed on at least one surface of the negative electrode current collector. The negative electrode mixture layer includes a negative electrode active substance. In some embodiments, a rechargeable capacity of the negative electrode active substance is greater than a discharge capacity of a positive electrode active substance to prevent lithium metal from unexpectedly precipitating onto the negative electrode during charging.

In some embodiments, a thickness of the negative electrode mixture layer is T µm, the negative electrode active substance includes silicon-based particles, an average particle size of the silicon-based particles is D µm, and 3.7 ≤ 10T/D² ≤ 24.9. In some embodiments, 7.0 ≤ 10T/D² ≤ 24.9. In some embodiments, 3.7 ≤ 10T/D² ≤ 18.1. In some embodiments, 7.0 ≤ 10T/D² ≤ 18.1. In some embodiments, 7.4 ≤ 10T/D² ≤ 18.1. In some embodiments, 7.0 ≤ 10T/D² ≤ 11.7. In some embodiments, 7.4 ≤ 10T/D² ≤ 11.7. In some embodiments, 3.7 ≤ 10T/D² ≤ 7.0. In some embodiments, 7.0 ≤ 10T/D² ≤ 7.4. In some embodiments, 11.7 ≤ 10T/D² ≤ 18.1. In some embodiments, 18.1 ≤ 10T/D² ≤ 24.9. In some embodiments, the value of 10T/D² is 3.7, 4.9, 6.6, 6.7, 7.0, 7.38, 7.6, 8.9, 10.5, 11.66, 13.0, 14.5, 15.2, 17.3, 18.1, 18.8, 19.7, 21.0, 22.3, 23.5, or 24.9, or falls within a range defined by any two of these values. In this application, the thickness T µm of the negative electrode mixture layer and the average particle size D µm of the silicon-based particles are adjusted to satisfy the above relationship, so that a distribution state and movable space of the carbon nanotubes in the negative electrode mixture layer can be optimized, helping to reduce the possibility of a disconnection in a conductive network path in the negative electrode due to the volume change of the silicon-based particles, thereby achieving a high energy density and reducing a high-temperature intermittent cycle resistance increase rate and fast-charge cycle resistance increase rate.

In some embodiments, 60 ≤ T ≤ 122. In some embodiments, 78.2 ≤ T ≤ 122. In some embodiments, 60 ≤ T ≤ 113.0. In some embodiments, 78.2 ≤ T ≤ 113.0. In some embodiments, 60 ≤ T ≤ 78.2. In some embodiments, 113.0 ≤ T ≤ 122. In some embodiments, T is 60, 62.2, 69.4, 70.7, 78.2, 80.1, 81.7, 82.9, 83.9, 89.8, 94.2, 98.7, 100.3, 103.2, 108.3, 112.2, 112.9, 114.9, 119.5, or 122, or falls within a range defined by any two of these values. Adjusting the thickness of the negative electrode mixture layer within the above range can reduce the high-temperature intermittent cycle resistance increase rate and fast-charge cycle resistance increase rate of the secondary battery.

In some embodiments, 7.0 ≤ D ≤ 12.7. In some embodiments, 7.0 ≤ D ≤ 10.6. In some embodiments, 7.6 ≤ D ≤ 12.7. In some embodiments, 7.6 ≤ D ≤ 10.6. In some embodiments, 7.0 ≤ D ≤ 7.6. In some embodiments, 10.6 ≤ D ≤ 12.7. In some embodiments, D is 7, 7.4, 7.6, 7.7, 7.9, 8.0, 8.5, 9.0, 9.2, 9.6, 10.0, 10.1, 10.6, 10.7, 10.8, 10.9, 11.2, 11.7, 12.0, 12.3, or 12.7, or falls within a range defined by any two of these values. Adjusting the average particle size of the silicon-based particles within the above range can reduce the high-temperature intermittent cycle resistance increase rate and fast-charge cycle resistance increase rate of the secondary battery.

In some embodiments, the silicon-based particles include at least one of a silicon substance, a silicon-carbon material (a composite of a silicon substance and a carbon substance), or a silicon oxide (SiOₓ, where 0 < x ≤ 2).

In some embodiments, the silicon substance may be silicon particles, silicon alloy particles, or the like.

For example, the composite of the silicon substance and the carbon substance may be an active substance, where the active substance is obtained by dispersing silicon nanoparticles with an average particle size of 200 nm or smaller onto the carbon substance particles, and then coating the silicon nanoparticles with carbon and an active substance having the silicon (Si) particles present on and within graphite. An average particle size of secondary particles of the composite of the silicon substance and the carbon substance may be 5 µm to 20 µm. In this application, the secondary particles of the composite of the silicon substance and the carbon substance refer to silicon substance particles and/or carbon substance particles in the composite of the silicon substance and the carbon substance, for example, silicon nanoparticles. An average particle size of the silicon nanoparticles may be 5 nm or larger, for example, 10 nm or larger, 20 nm or larger, 50 nm or larger, or 70 nm or larger. The average particle size of the silicon nanoparticles may be 200 nm or smaller, 150 nm or smaller, 100 nm or smaller, 50 nm or smaller, 20 nm or smaller, or 10 nm or smaller. For example, the average particle size of the silicon nanoparticles may be 100 nm to 150 nm. The average particle size of the secondary particles of the composite of the silicon substance and the carbon substance may be 5 µm to 20 µm, for example, 7 µm to 15 µm, or 10 µm to 13 µm.

In some preferred embodiments, the silicon-based particle includes a carbon skeleton and a protective layer located on at least a portion of a surface of the carbon skeleton, a material of the protective layer includes amorphous carbon, and a material of the carbon skeleton includes at least one selected from the group consisting of artificial graphite, natural graphite, mesocarbon microbeads, soft carbon, and hard carbon.

Optionally, the negative electrode active substance may further include an amorphous carbon material, where the amorphous carbon may be soft carbon (low-temperature calcined carbon), hard carbon, a mesophase pitch carbonization product, or calcined coke.

The type of a negative electrode conductive agent is not particularly limited in this application, provided that the objectives of this application can be achieved. For example, the negative electrode conductive agent may be at least one of acetylene black, Ketjen black, carbon nanotubes, carbon fiber, carbon dots, or graphene, and the above carbon nanotubes may include but are not limited to at least one of single-walled carbon nanotubes or multi-walled carbon nanotubes.

The negative electrode current collector is not particularly limited in this application, provided that the objectives of this application can be achieved. For example, the negative electrode current collector may include copper foil, aluminum foil, nickel foil, stainless steel foil, titanium foil, copper foam, a polymer substrate coated with conductive metal, or the like. The conductive metal includes but is not limited to copper, nickel, or titanium, and the material of the polymer substrate includes but is not limited to at least one of polyethylene, polypropylene, ethylene-propylene copolymer, polyethylene terephthalate, polyethylene naphthalate, or polyparaphenylene terephthalamide. In this application, thicknesses of the negative electrode current collector and the negative electrode mixture layer are not particularly limited, provided that the objectives of this application can be achieved. For example, the thickness of the negative electrode current collector is 4 µm to 12 µm, and the thickness of the negative electrode mixture layer applied onto one surface is 30 µm to 160 µm. In this application, the negative electrode mixture layer may be disposed on one or two surfaces of the negative electrode current collector in a thickness direction of the negative electrode current collector. It should be noted that the "surface" herein may be an entire zone or a partial zone of the negative electrode current collector. This is not particularly limited in this application, provided that the objectives of this application can be achieved.

A negative electrode active substance layer may further include a negative electrode binder. The negative electrode binder can improve binding between particles of the negative electrode active substance and binding between the negative electrode active substance and the current collector. The type of the negative electrode binder is not particularly limited, provided that a material of the negative electrode binder is stable to an electrolyte or a solvent used for preparation of an electrode. In some embodiments, the negative electrode binder includes a resin binder. Examples of the resin binder include but are not limited to fluororesin, polyacrylonitrile (PAN), polyimide resin, acrylic resin, and polyolefin resin. When an aqueous solvent is used to prepare a negative electrode mixture slurry, the negative electrode binder includes but is not limited to hydroxyethyl carboxymethyl cellulose (HECMC) or its salt, carboxymethyl cellulose (CMC) or its salt, styrene-butadiene rubber (SBR), polyacrylic acid (PAA) or its salt, and polyvinyl alcohol.

For example, the negative electrode may be prepared using the following method: a negative electrode mixture slurry containing the negative electrode binder, silicon-carbon composite particles, a conductive agent, and the like is applied onto the negative electrode current collector; and after drying, rolling is performed to form negative electrode mixture layers on two surfaces of the negative electrode current collector, then the negative electrode can be obtained.

A compacted density of a negative electrode plate is not particularly limited in this application, provided that the objectives of this application can be achieved. For example, the compacted density of the negative electrode plate may be 1.0 g/cm³ to 1.85 g/cm³. Cold pressing pressure of the negative electrode plate is not particularly limited in this application, provided that the objectives of this application can be achieved. For example, the cold pressing pressure of the negative electrode plate may be 3 tons to 30 tons.

### Electrolyte

An electrolyte used in the secondary battery of this application includes an electrolyte and a solvent for dissolving the electrolyte. In some embodiments, the electrolyte of this application includes a dinitrile compound or a trinitrile compound. Cyano groups in the dinitrile compound and trinitrile compound have low reaction steric hindrance and high nucleophilic nucleophilicity. When the dinitrile compound and trinitrile compound containing the cyano groups participate in the generation of a solid electrolyte interface film on the surfaces of the silicon-based particles, the generated solid electrolyte interface film has a special adsorption capability of adsorbing the carbon nanotubes, so that the high-temperature intermittent cycle resistance increase rate and fast-charge cycle resistance increase rate of the secondary battery can be reduced.

In some embodiments, the dinitrile compound includes at least one selected from the group consisting of malononitrile, succinonitrile, glutaronitrile, adiponitrile, pimelonitrile, suberonitrile, 3,3'-oxydipropionitrile, hex-2-enedinitrile, fumaronitrile, 2-pentenedinitrile, methylglutaronitrile, (Z)-but-2-enedinitrile, 2,2,3,3-tetrafluorosuccinonitrile, and 1,2-bis(2-cyanoethoxy)ethane; and/or the trinitrile compound includes at least one selected from the group consisting of 1,3,6-hexanetricarbonitrile, 1,3,5-pentanetricarbonitrile, 4-(2-cyanoethyl)heptanedinitrile, and 1,2,3-tris(2-cyanoethoxy)propane. Adjusting the dinitrile compound and/or the trinitrile compound to respectively include the above types of substances can improve the quality of the SEI film and reduce the high-temperature intermittent cycle resistance increase rate and fast-charge cycle resistance increase rate of the secondary battery.

In some embodiments, the dinitrile compound includes at least two selected from the group consisting of malononitrile, succinonitrile, glutaronitrile, adiponitrile, pimelonitrile, suberonitrile, 3,3'-oxydipropionitrile, hex-2-enedinitrile, fumaronitrile, 2-pentenedinitrile, methylglutaronitrile, (Z)-but-2-enedinitrile, 2,2,3,3-tetrafluorosuccinonitrile, and 1,2-bis(2-cyanoethoxy)ethane; and/or the trinitrile compound includes at least two selected from the group consisting of 1,3,6-hexanetricarbonitrile, 1,3,5-pentanetricarbonitrile, 4-(2-cyanoethyl)heptanedinitrile, and 1,2,3-tris(2-cyanoethoxy)propane. Adjusting the dinitrile compound and/or the trinitrile compound to respectively include at least two of the above types of substances allows for a better match with the negative electrode, thereby further reducing the high-temperature intermittent cycle resistance increase rate and fast-charge cycle resistance increase rate of the secondary battery.

In some embodiments, a mass percentage of the dinitrile compound is N₁%, a mass percentage of the trinitrile compound is N₂%, and 1.1 ≤ N₁/N₂ ≤ 4.9. In some embodiments, 2.2 ≤ N₁/N₂ ≤ 4.9. In some embodiments, 1.1 ≤ N₁/N₂ ≤ 3.7. In some embodiments, 2.2 ≤ N₁/N₂ ≤ 3.7. In some embodiments, 2.2 ≤ N₁/N₂ ≤ 3.3. In some embodiments, 1.1 ≤ N₁/N₂ ≤ 2.2. In some embodiments, 3.3 ≤ N₁/N₂ ≤ 3.7. In some embodiments, 3.7 ≤ N₁/N₂ ≤ 4.9. In some embodiments, the value of N₁/N₂ is 1.1, 1.4, 1.6, 1.7, 1.8, 2.0, 2.2, 2.4, 2.9, 3.1, 3.3, 3.5, 3.7, 3.8, 4.3, 4.5, 4.7, or 4.9, or falls within a range defined by any two of these values. Adjusting the value of N₁/N₂ within the above range can further reduce the possibility of the disconnection in the conductive network path in the negative electrode due to the volume change of the silicon-based particles can be reduced, and reduce the high-temperature intermittent cycle resistance increase rate and fast-charge cycle resistance increase rate of the secondary battery.

In some embodiments, 3.2 ≤ N₁ ≤ 6.8. In some embodiments, 4.9 ≤ N₁ ≤ 6.8. In some embodiments, 3.2 ≤ N₁ ≤ 4.9. In some embodiments, 4.9 ≤ N₁ ≤ 5.9. In some embodiments, 3.2 ≤ N₁ ≤ 4.9. In some embodiments, 5.9 ≤ N₁ ≤ 6.8. In some embodiments, the value of N₁ is 3.2, 3.4, 3.7, 3.9, 4.1, 4.2, 4.5, 4.7, 4.9, 5.1, 5.2, 5.3, 5.5, 5.6, 5.8, 5.9, 6.2, 6.5, 6.6, or 6.8, or falls within a range defined by any two of these values. Adjusting the mass percentage of the dinitrile compound in the electrolyte within the above range is conducive to further reducing the high-temperature intermittent cycle resistance increase rate and fast-charge cycle resistance increase rate of the secondary battery.

In some embodiments, 1.4 ≤ N₂ ≤ 2.9. In some embodiments, 1.4 ≤ N₂ ≤ 2.2. In some embodiments, 1.6 ≤ N₂ ≤ 2.9. In some embodiments, 1.6 ≤ N₂ ≤ 2.2. In some embodiments, 1.4 ≤ N₂ ≤ 1.6. In some embodiments, 2.2 ≤ N₂ ≤ 2.9. In some embodiments, the value of N₂ is 1.4, 1.5, 1.6, 1.7, 1.8, 1.9, 2.0, 2.1, 2.2, 2.4, 2.5, 2.6, 2.7, 2.8, or 2.9, or falls within a range defined by any two of these values. Adjusting the mass percentage of the trinitrile compound in the electrolyte within the above range is conducive to further reducing the high-temperature intermittent cycle resistance increase rate and fast-charge cycle resistance increase rate of the secondary battery.

In some embodiments, the electrolyte includes succinonitrile and adiponitrile, where based on a mass of the electrolyte, a mass percentage of the succinonitrile is A₁%, a mass percentage of the adiponitrile is A₂%, and 1.27 ≤ A₁/A₂ ≤ 3.36. In some embodiments, 1.84 ≤ A₁/A₂ ≤ 3.36. In some embodiments, 1.27 ≤ A₁/A₂ ≤ 2.91. In some embodiments, 1.84 ≤ A₁/A₂ ≤ 2.91. In some embodiments, 1.27 ≤ A₁/A₂ ≤ 1.84. In some embodiments, 2.91 ≤ A₁/A₂ ≤ 3.36. In some embodiments, the value of A₁/A₂ is 1.27, 1.33, 1.52, 1.66, 1.78, 2.06, 2.18, 2.35, 2.55, 2.70, 2.77, 3.01, 3.12, 3.26, or 3.36, or falls within a range defined by any two of these values. Adjusting the mass percentages of the succinonitrile and adiponitrile in the electrolyte to satisfy the above relationship can reduce the high-temperature intermittent cycle resistance increase rate and fast-charge cycle resistance increase rate of the secondary battery.

In some embodiments, 2.8 ≤ A₁ ≤ 3.7; and 1.1 ≤ A₂ ≤ 2.2. In some embodiments, 2.8 ≤ A₁ ≤ 3.2. In some embodiments, 2.8 ≤ A₁ ≤ 3.5. In some embodiments, 3.2 ≤ A₁ ≤ 3.5. In some embodiments, 3.2 ≤ A₁ ≤ 3.7. In some embodiments, 3.5 ≤ A₁ ≤ 3.7. In some embodiments, 1.1 ≤ A₂ ≤ 1.7. In some embodiments, 1.1 ≤ A₂ ≤ 1.9. In some embodiments, 1.7 ≤ A₂ ≤ 2.2. In some embodiments, 1.7 ≤ A₂ ≤ 1.9. In some embodiments, 1.9 ≤ A₂ ≤ 2.2. In some embodiments, the value of A₁ is 2.8, 2.9, 3.0, 3.1, 3.2, 3.3, 3.4, 3.5, 3.6, or 3.7, or falls within a range defined by any two of these values. In some embodiments, the value of A₂ is 1.1, 1.2, 1.3, 1.4, 1.5, 1.6, 1.7, 1.8, 1.9, 2.0, 2.1, or 2.2, or falls within a range defined by any two of these values. Adjusting the succinonitrile and/or the adiponitrile in the electrolyte to satisfy the above ranges respectively can further reduce the high-temperature intermittent cycle resistance increase rate and fast-charge cycle resistance increase rate of the secondary battery.

In some embodiments, the electrolyte includes 1,2-bis(2-cyanoethoxy)ethane and 1,3,6-hexanetricarbonitrile, where based on a mass of the electrolyte, a mass percentage of the 1,2-bis(2-cyanoethoxy)ethane is B₁%, a mass percentage of 1,3,6-hexanetricarbonitrile is B₂%, and 0.83 ≤ B₁/B₂ ≤ 2.43. In some embodiments, 0.83 ≤ B₁/B₂ ≤ 2.00. In some embodiments, 1.36 ≤ B₁/B₂ ≤ 2.43. In some embodiments, 1.36 ≤ B₁/B₂ ≤ 2.00. In some embodiments, 0.83 ≤ B₁/B₂ ≤ 1.36. In some embodiments, 1.36 ≤ B₁/B₂ ≤ 2.43. In some embodiments, the value of B₁/B₂ is 0.83, 0.91, 1.00, 1.12, 1.32, 1.33, 1.36, 1.55, 1.66, 1.77, 1.82, 2.00, 2.13, 2.19, 2.33, or 2.43, or falls within a range defined by any two of these values. Adjusting the mass percentages of 1,2-bis(2-cyanoethoxy)ethane and 1,3,6-hexanetricarbonitrile in the electrolyte to satisfy the above relationship can reduce the high-temperature intermittent cycle resistance increase rate and fast-charge cycle resistance increase rate of the secondary battery.

In some embodiments, 1.0 ≤ B₁ ≤ 1.7; and 0.7 ≤ B₂ ≤ 1.2. In some embodiments, 1.0 ≤ B₁ ≤ 1.5. In some embodiments, 1.5 ≤ B₁ ≤ 1.7. In some embodiments, 0.7 ≤ B₂ ≤ 0.8. In some embodiments, 0.8 ≤ B₂ ≤ 1.1. In some embodiments, 1.1 ≤ B₂ ≤ 1.2. In some embodiments, 0.7 ≤ B₂ ≤ 1.1. In some embodiments, 0.8 ≤ B₂ ≤ 1.2. In some embodiments, the value of B₁ is 1.0, 1.1, 1.2, 1.3, 1.4, 1.5, 1.6, or 1.7, or falls within a range defined by any two of these values. In some embodiments, the value of B₂ is 0.7, 0.8, 0.9, 1.0, 1.1, or 1.2, or falls within a range defined by any two of these values. Adjusting 1,2-bis(2-cyanoethoxy)ethane and/or 1,3,6-hexanetricarbonitrile in the electrolyte to satisfy the above ranges respectively can further reduce the high-temperature intermittent cycle resistance increase rate and fast-charge cycle resistance increase rate of the secondary battery.

In some embodiments, the electrolyte includes ethylene carbonate and propylene carbonate, where based on a mass of the electrolyte, a mass percentage of the ethylene carbonate is X₁%, a mass percentage of the propylene carbonate is X₂%, and 29 ≤ X₁ + X₂ ≤ 51. In some embodiments, 34 ≤ X₁ + X₂ ≤ 51. In some embodiments, 29 ≤ X₁ + X₂ ≤ 46. In some embodiments, 34 ≤ X₁ + X₂ ≤ 46. In some embodiments, 29 ≤ X₁ + X₂ ≤ 34. In some embodiments, 46 ≤ X₁ + X₂ ≤ 51. In some embodiments, the value of X₁ + X₂ is 29, 30, 32, 33, 35, 36, 38, 39, 41, 43, 45, 47, 49, 50, or 51, or falls within a range defined by any two of these values. Adjusting a sum of the mass percentages of the ethylene carbonate and propylene carbonate in the electrolyte within the above range can reduce the high-temperature intermittent cycle resistance increase rate and fast-charge cycle resistance increase rate of the secondary battery.

In some embodiments, 1.1 ≤ X₂/X₁ ≤ 2.5. In some embodiments, 1.6 ≤ X₂/X₁ ≤ 2.5. In some embodiments, 1.1 ≤ X₂/X₁ ≤ 2.2. In some embodiments, 1.6 ≤ X₂/X₁ ≤ 2.2. In some embodiments, 1.1 ≤ X₂/X₁ ≤ 1.6. In some embodiments, 2.2 ≤ X₂/X₁ ≤ 2.5. In some embodiments, the value of X₂/X₁ is 1.1, 1.2, 1.3, 1.4, 1.5, 1.6, 1.7, 1.8, 1.9, 2.0, 2.1, 2.2, 2.3, 2.4, or 2.5, or falls within a range defined by any two of these values. Adjusting the mass percentages of the ethylene carbonate and propylene carbonate in the electrolyte to satisfy the above relationship can further reduce the high-temperature intermittent cycle resistance increase rate and fast-charge cycle resistance increase rate of the secondary battery.

In some embodiments, the electrolyte includes ethyl propionate and propyl propionate, where based on a mass of the electrolyte, a mass percentage of the ethyl propionate is Y₁%, a mass percentage of the propyl propionate is Y₂%, 35 ≤ Y₁ + Y₂ ≤ 62. In some embodiments, 41 ≤ Y₁ + Y₂ ≤ 62. In some embodiments, 35 ≤ Y₁ + Y₂ ≤ 55. In some embodiments, 41 ≤ Y₁ + Y₂ ≤ 55. In some embodiments, 35 ≤ Y₁ + Y₂ ≤ 41. In some embodiments, 55 ≤ Y₁ + Y₂ ≤ 62. In some embodiments, the value of Y₁ + Y₂ is 35, 36, 39, 40, 41, 43, 44, 47, 48, 50, 52, 55, 56, 59, 61, or 62, or falls within a range defined by any two of these values. Adjusting a sum of the mass percentages of the ethyl propionate and propyl propionate in the electrolyte within the above range can reduce the high-temperature intermittent cycle resistance increase rate and fast-charge cycle resistance increase rate of the secondary battery.

In some embodiments, 1.2 ≤ Y₂/Y₁ ≤ 2.9. In some embodiments, 1.2 ≤ Y₂/Y₁ ≤ 2.5. In some embodiments, 1.5 ≤ Y₂/Y₁ ≤ 2.9. In some embodiments, 1.5 ≤ Y₂/Y₁ ≤ 2.5. In some embodiments, 1.2 ≤ Y₂/Y₁ ≤ 1.5. In some embodiments, 2.5 ≤ Y₂/Y₁ ≤ 2.9. In some embodiments, the value of Y₂/Y₁ is 1.2, 1.3, 1.4, 1.5, 1.6, 1.7, 1.9, 2.1, 2.2, 2.3, 2.4, 2.5, 2.7, 2.8, or 2.9, or falls within a range defined by any two of these values. Adjusting the mass percentages of the ethyl propionate and propyl propionate in the electrolyte to satisfy the above relationship can further reduce the high-temperature intermittent cycle resistance increase rate and fast-charge cycle resistance increase rate of the secondary battery.

In some embodiments, the electrolyte includes a fluorine-containing compound, where the fluorine-containing compound includes at least one of fluorobenzene or fluoroethylene carbonate; and based on a mass of the electrolyte, a mass percentage of the fluorobenzene is F₁%, where 0.9 ≤ F₁ ≤ 4.1. In some embodiments, 0.9 ≤ F₁ ≤ 3.4. In some embodiments, 2.7 ≤ F₁ ≤ 4.1. In some embodiments, 2.7 ≤ F₁ ≤ 3.4. In some embodiments, 0.9 ≤ F₁ ≤ 2.7. In some embodiments, 3.4 ≤ F₁ ≤ 4.1. In some embodiments, F₁ is 0.9, 1.0, 1.2, 1.6, 1.8, 1.9, 2.3, 2.6, 2.7, 2.9, 3.0, 3.2, 3.4, 3.6, 3.9, or 4.1, or falls within a range defined by any two of these values. Adjusting the mass percentage of the fluorobenzene in the electrolyte within the above range can improve the carbon nanotube adsorption capability of the generated solid electrolyte interface film and reduce the high-temperature intermittent cycle resistance increase rate and fast-charge cycle resistance increase rate of the secondary battery.

**In** some embodiments, based on the mass of the electrolyte, the mass percentage of the fluoroethylene carbonate is F₂%, where 10.5 ≤ F₂ ≤ 19.5. In some embodiments, 12.5 ≤ F₂ ≤ 19.5. In some embodiments, 10.5 ≤ F₂ ≤ 17.5. In some embodiments, 12.5 ≤ F₂ ≤ 17.5. In some embodiments, 10.5 ≤ F₂ ≤ 12.5. In some embodiments, 12.5 ≤ F₂ ≤ 17.5. In some embodiments, 17.5 ≤ F₂ ≤ 19.5. In some embodiments, F₂ is 10.5, 10.9, 11.3, 12.5, 13.2, 13.7, 14.1, 14.7, 15.6, 16.6, 16.8, 17.5, 17.8, 18.3, 19.2, or 19.5, or falls within a range defined by any two of these values. Adjusting the mass percentage of the fluoroethylene carbonate in the electrolyte within the above range can improve the carbon nanotube adsorption capability of the generated solid electrolyte interface film and reduce the high-temperature intermittent cycle resistance increase rate and fast-charge cycle resistance increase rate of the secondary battery.

**In** some embodiments, the electrolyte includes a compound of formula I, where based on a mass of the electrolyte, a mass percentage of the compound of formula I is H%, where 0.2 ≤ H ≤ 0.9. In some embodiments, 0.2 ≤ H ≤ 0.5. In some embodiments, 0.5 ≤ H ≤ 0.9. In some embodiments, H is 0.2, 0.3, 0.4, 0.5, 0.6, 0.7, 0.8, or 0.9, or falls within a range defined by any two of these values. Adding the compound of formula I into the electrolyte and adjusting the mass percentage of the compound of formula I within the above range can further reduce the high-temperature intermittent cycle resistance increase rate and fast-charge cycle resistance increase rate.

In this application, a chemical formula of the compound of formula I is as follows:

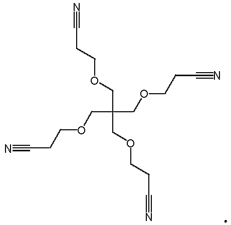

**In** some embodiments, the electrolyte includes a compound of formula II, where based on a mass of the electrolyte, a mass percentage of the compound of formula II is G%, where 0.2 ≤ G ≤ 0.7. In some embodiments, 0.2 ≤ G ≤ 0.4. In some embodiments, 0.4 ≤ G ≤ 0.7. In some embodiments, G is 0.2, 0.3, 0.4, 0.5, 0.6, 0.7, or falls within a range defined by any two of these values. Adding the compound of formula II into the electrolyte and adjusting the mass percentage of the compound of formula II within the above range can further reduce the high-temperature intermittent cycle resistance increase rate and fast-charge cycle resistance increase rate.

A chemical formula of the compound of formula II is as follows:

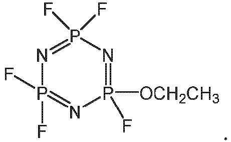

The electrolyte may further include a lithium salt and an organic solvent. The type of the lithium salt is not particularly limited in this application, provided that the objectives of this application can be achieved. For example, the lithium salt may include but is not limited to at least one of lithium hexafluorophosphate (LiPF₆), lithium tetrafluoroborate (LiBF₄), lithium difluorophosphate (LiPO₂F₂), lithium bistrifluoromethanesulfonimide (LiTFSI), lithium bis(fluorosulfonyl)imide (LiFSI), lithium bis(oxalate) borate (LiBOB), or lithium difluoro(oxalato)borate (LiDFOB). Based on the mass of the electrolyte, a mass percentage of the lithium salt may be 8% to 15%. For example, the mass percentage of the lithium salt may be 8%, 9%, 10%, 11%, 12.5%, 13%, or 15%, or falls within a range defined by any two of these values. The type of the organic solvent is not particularly limited in this application, provided that the objectives of this application can be achieved. For example, the organic solvent may include but is not limited to at least one of a carbonate compound, a carboxylate compound, an ether compound, or another organic solvent. The carbonate compound may include but is not limited to a linear carbonate compound or a cyclic carbonate compound. The linear carbonate compound may include but is not limited to dimethyl carbonate, diethyl carbonate, dipropyl carbonate, methyl propyl carbonate, ethyl propyl carbonate, or ethyl methyl carbonate. The cyclic carbonate compound may include but is not limited to ethylene carbonate, propylene carbonate, butylene carbonate, or vinylethylene carbonate. The carboxylate compound may include but is not limited to at least one of methyl formate, methyl acetate, ethyl acetate, n-propyl acetate, tert-butyl acetate, methyl propionate, ethyl propionate, propyl propionate, γ-butyrolactone, decanolide, valerolactone, or caprolactone. The ether compound may include but is not limited to at least one of ethylene glycol dimethyl ether, dibutyl ether, tetraethylene glycol dimethyl ether, diethylene glycol dimethyl ether, 1,2-dimethoxyethane, 1,2-diethoxyethane, 1-ethoxy-1-methoxyethane, 2-methyltetrahydrofuran, or tetrahydrofuran. The another organic solvent may include but is not limited to at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate.

### Positive electrode

The positive electrode includes a positive electrode current collector and a positive electrode mixture layer disposed on a surface of the positive electrode current collector.

The positive electrode mixture layer includes a positive electrode active substance, and one or more positive electrode mixture layers may be provided. Each of a plurality of positive electrode active substance layers may include the same or different positive electrode active substances. The positive electrode active substance is any substance capable of implementing reversible intercalation and deintercalation of alkali metal ions.

In some embodiments, the positive electrode active substance includes a lithium transition metal oxide containing nickel and another transition metal. In the lithium transition metal oxide containing nickel and another transition metal, with respect to a total molar amount of the transition metal, an amount of nickel may be 60 mol% or more, for example, 75 mol% or more, 80 mol% or more, 85 mol% or more, or 90 mol% or more.

For example, the lithium transition metal oxide may be a compound represented by the following formula α:

formula α: LiₐNiₓCo_{y}M_{z}O_{2-b}A_{b},

where in formula α, 0.9 ≤ a ≤ 1.2, 0 ≤ b ≤ 0.2, 0.6 ≤ x < 1, 0 < y ≤ 0.3, 0 < z ≤ 0.3, and x + y + z = 1; M is at least one selected from manganese (Mn), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), or boron (B); and A is F, S, Cl, Br, or a combination thereof. For example, the above subscripts may be as follows: 0.7 ≤ x <1, 0 < y ≤ 0.3, and 0 < z ≤ 0.3; 0.8 ≤ x < 1, 0 < y ≤ 0.3, and 0 < z ≤ 0.3; 0.8 ≤ x < 1, 0 < y ≤ 0.2, and 0 < z ≤ 0.2; 0.83 ≤ x < 0.97, 0 < y ≤ 0.15, and 0 < z ≤ 0.15; or 0.85 ≤ x < 0.95, 0 < y ≤ 0.1, and 0 < z ≤ 0.1.

For example, the lithium transition metal oxide may be at least one compound represented by the following formula β or formula γ:

formula β: LiNiₓCo_{y}Mn_{z}O₂,

where in formula β, 0.6 ≤ x ≤ 0.95, 0 < y ≤ 0.2, and 0 < z ≤ 0.1; for example, 0.7 ≤ x ≤ 0.95, 0 < y ≤ 0.3, and 0 < z ≤ 0.3; or

formula γ: LiNiₓCo_{y}Al_{z}O₂,

where in formula γ, 0.6 ≤ x ≤ 0.95, 0 < y ≤ 0.2, and 0 < z ≤ 0.1; for example, 0.7 ≤ x ≤ 0.95, 0 < y ≤ 0.3, and 0 < z ≤ 0.3; 0.8 ≤ x ≤ 0.95, 0 < y ≤ 0.3, and 0 < z ≤ 0.3; 0.82 ≤ x ≤ 0.95, 0 < y ≤ 0.15, and 0 < z ≤ 0.15; or 0.85 ≤ x ≤ 0.95, 0 < y ≤ 0.1, and 0 < z ≤ 0.1.

For example, the lithium transition metal oxide may be LiNi_{0.6}Co_{0.2}Mn_{0.2}O₂, LiNi_{0.88}Co_{0.08}Mn_{0.04}O₂, LiNi_{0.8}Co_{0.15}Mn_{0.05}O₂, LiNi_{0.8}Co_{0.1}Mn_{0.1}O₂, LiNi_{0.88}Co_{0.1}Mn_{0.02}O₂, LiNi_{0.8}Co_{0.15}Al_{0.05}O₂, or LiNi_{0.88}Co_{0.1}Al_{0.02}O₂.

According to another embodiment, the positive electrode active substance includes at least one active substance selected from a group consisting of Li-Ni-Co-Al (NCA), Li-Ni-Co-Mn (NCM), lithium cobalt oxide (LiCoO₂), lithium manganese oxide (LiMnO₂), lithium nickel oxide (LiNiO₂), and lithium iron phosphate (LiFePO₄).

In some embodiments, the positive electrode mixture layer includes a positive electrode conductive material. The positive electrode conductive material is not limited in type and may be any known conductive material. Examples of the positive electrode conductive material may include but are not limited to: carbon blacks such as acetylene black and Super-P; amorphous carbon materials such as needle coke; carbon nanotubes; and graphene. The positive electrode conductive material may be used alone or in any combination.

A type of a positive electrode binder used for preparation of the positive electrode mixture layer is not particularly limited, provided that the positive electrode binder is a material that can be dissolved or dispersed in a liquid medium used for preparation of an electrode in a coating application method. Examples of the positive electrode binder may include but are not limited to one or more selected from a group consisting of the following: a resin polymer such as polyethylene, polypropylene, polyethylene terephthalate, polymethyl methacrylate, polyimide, aromatic polyamide, cellulose, or nitrocellulose; a rubber polymer such as styrene-butadiene rubber (SBR), nitrile rubber (NBR), fluororubber, isoprene rubber, butadiene rubber, and ethylene-propylene rubber; a thermoplastic elastomer polymer such as a styrene-butadiene-styrene block copolymer or hydride thereof, an ethylene-propylene-diene terpolymer (EPDM), a styrene-ethylene-butadiene-ethylene copolymer, or a styrene-isoprene-styrene block copolymer or hydride thereof; a soft resin polymer such as syndiotactic-1,2-polybutadiene, polyvinyl acetate, an ethylene-vinyl acetate copolymer, or propylene-α-olefin copolymer; a fluorine polymer such as polyvinylidene fluoride (PVDF), polytetrafluoroethylene, fluorinated polyvinylidene fluoride, or a polytetrafluoroethylene-ethylene copolymer; a polymer composite with ionic conductivity of alkali metal ions (especially lithium ions); and the like. The positive electrode binder may be used alone or in any combination.

A solvent used for forming a positive electrode slurry is not limited in type, provided that the solvent is capable of dissolving or dispersing the positive electrode active substance, the conductive material, the positive electrode binder, and a thickener used based on the needs. Examples of the solvent used for forming the positive electrode slurry may include any one of an aqueous solvent or an organic solvent. Examples of the aqueous medium may include but are not limited to water or a mixed medium of alcohols and water. Examples of the organic medium may include but are not limited to: aliphatic hydrocarbons such as hexane; aromatic hydrocarbons such as benzene, toluene, xylene, and methylnaphthalene; heterocyclic compounds such as quinoline and pyridine; ketones such as acetone, methyl ethyl ketone, and cyclohexanone; esters such as methyl acetate and methyl acrylate; amines such as diethylenetriamine and N,N-dimethylaminopropylamine; ethers such as diethyl ether, propylene oxide, and tetrahydrofuran (THF); amides such as N-methylpyrrolidone (NMP), dimethylformamide, and dimethylacetamide; and aprotic polar solvents such as hexamethylphosphoramide and dimethyl sulfoxide.

The thickener is typically used to adjust the viscosity of the slurry. In a case that the aqueous medium is used, the thickener and a styrene-butadiene rubber (SBR) emulsion can be used for slurrying. The thickener is not particularly limited in type. Examples of the thickener may include but are not limited to carboxymethyl cellulose, methyl cellulose, hydroxymethyl cellulose, ethyl cellulose, polyvinyl alcohol, oxidized starch, phosphorylated starch, casein, and salts thereof. The thickener may be used alone or in any combination.

The positive electrode current collector is not particularly limited in type and may be any known material suitable for serving as a positive electrode current collector. Examples of the positive electrode current collector may include but are not limited to: metal materials such as aluminum, stainless steel, nickel coating, titanium, and tantalum; and carbon materials such as carbon cloth and carbon paper. In some embodiments, the positive electrode current collector is a metal material. In some embodiments, the positive electrode current collector is aluminum.

To reduce electronic contact resistance of the positive electrode current collector and the positive electrode mixture layer, a conductive additive or a conductive coating may be included in the surface of the positive electrode current collector. Examples of the conductive additive may include but are not limited to carbon and precious metals such as gold, platinum, and silver. Examples of the conductive coating may include a mixture layer containing an inorganic oxide, a conductive agent, and a binder.

The positive electrode may be prepared by forming the positive electrode mixture layer containing the positive electrode active substance and the binder on the current collector. The positive electrode using the positive electrode active substance can be prepared in a conventional method as follows: The positive electrode active substance, the binder, and the conductive material and the thickener used as appropriate to needs are subjected to dry mixing to prepare a plate, and then the obtained plate is pressed onto the positive electrode current collector; or these materials are dissolved or dispersed in a liquid medium to prepare a slurry, and then the slurry is applied onto the positive electrode current collector and drying is performed to form the positive electrode mixture layer on the current collector. In this way, the positive electrode can be obtained.

### Separator

In order to prevent short circuit, a separator is typically provided between the positive electrode and the negative electrode. In this case, the electrolyte of this application typically permeates the separator.

The material and shape of the separator are not particularly limited, provided that the separator does not significantly impair the effects of this application. The separator may be a resin, glass fiber, an inorganic substance, or the like that is formed of a material stable to the electrolyte of this application. In some embodiments, the separator includes a porous sheet or nonwoven fabric-like substance having an excellent fluid retention property, or the like. Examples of the material of the resin or glass fiber separator may include but are not limited to polyolefin, aromatic polyamide, polytetrafluoroethylene, and polyethersulfone. In some embodiments, the polyolefin is polyethylene or polypropylene. In some embodiments, the polyolefin is polypropylene. The material of the separator may be used alone or in any combination.

The separator may alternatively be a material formed by laminating the foregoing materials, and examples thereof include but are not limited to a three-layer separator formed by laminating polypropylene, polyethylene, and polypropylene in order.

Examples of the material of the inorganic substance may include but are not limited to oxides such as aluminum oxide and silicon dioxide, nitrides such as aluminum nitride and silicon nitride, and sulfates (for example, barium sulfate and calcium sulfate). The form of the inorganic substance may include but is not limited to a granular or fibrous form.

The form of the separator may be a thin-film form, and examples thereof include but are not limited to a non-woven fabric, a woven fabric, and a microporous film. In the thin-film form, the separator has a pore size of 0.01 µm to 1 µm and a thickness of 5 µm to 50 µm. In addition to the independent thin-film-like separator, the following separator may alternatively be used: a separator that is obtained by using a resin-based binder to form a composite porous layer containing inorganic substance particles on the surface of the positive electrode and/or the negative electrode, for example, a separator that is obtained by using fluororesin as a binder to form a porous layer on two surfaces of the positive electrode with aluminum oxide particles of which 90% have a particle size less than 1 µm.

The thickness of the separator is random. In some embodiments, the thickness of the separator is greater than 1 µm, greater than 5 µm, or greater than 8 µm. In some embodiments, the thickness of the separator is less than 50 µm, less than 40 µm, or less than 30 µm. When the thickness of the separator falls within the above range, its insulation performance and mechanical strength can be ensured, and the rate performance and energy density of the secondary battery can be ensured.

This application further provides an electronic device including the secondary battery according to this application.

The secondary battery of this application is not particularly limited to any purpose, and may be used for any known electronic device in the prior art. In some embodiments, the secondary battery of this application may be used without limitation in notebook computers, pen-input computers, mobile computers, electronic book players, portable telephones, portable fax machines, portable copiers, portable printers, stereo headsets, video recorders, liquid crystal display televisions, portable cleaners, portable CD players, mini-disc players, transceivers, electronic notebooks, calculators, storage cards, portable recorders, radios, backup power sources, motors, automobiles, motorcycles, motor bicycles, bicycles, lighting appliances, toys, game consoles, timepieces, electric tools, flash lamps, cameras, large household batteries, and lithium-ion capacitors.

### Examples

The following describes some embodiments of the secondary battery of this application more specifically by using examples and comparative examples, with a lithium-ion battery as an example. Persons skilled in the art understand that a preparation method described in this application is only an example, and that any other appropriate preparation method falls within the scope of this application. Various tests and evaluations were performed in the following methods. In addition, unless otherwise specified, "part" and "%" are based on mass.

### Test method

### Resistance increase rate after high-temperature (65°C) intermittent cycle

(1) Test of initial resistance: The lithium-ion battery was transferred to a charging and discharging apparatus at room temperature (25°C), then charged to 4.45 V at a constant current of 0.33C, and then charged to a cut-off current of 0.05C at a constant voltage of 4.45 V, and discharged to 3.0 V at 0.33C. Then, after three charge and discharge cycles were performed, based on a discharge capacity of the last cycle, the battery was set to SOC 50%. Then, a direct-current internal resistance (a PNE-0506 charging and discharging apparatus) was measured through voltage drop displayed after a discharge pulse was applied at 5A (2.5C) for 10 seconds, and the resistance at that time point was defined as the initial resistance.
(2) High-temperature intermittent cycle: The lithium-ion battery with the initial resistance measured was transferred under a high temperature (65°C), then charged to 4.25 V at a constant current of 0.5C, and then charged to 0.05C at a constant voltage of 4.25 V. The thickness of the battery was recorded as an initial thickness in the cycle. Then, the battery was left standing for 24 hours and then discharged to 3.0 V at a constant current of 0.5C. The above charge and discharge process was set as one high-temperature intermittent cycle. A total of 80 high-temperature intermittent charge and discharge cycles were performed.
(3) Resistance after high-temperature intermittent cycle: The lithium-ion battery was transferred into the charging and discharging apparatus at room temperature, and then the SOC was set to 50%. Then, the resistance after 80 cycles was measured using the PNE-0506 charging and discharging apparatus through voltage drop displayed after the discharge pulse was applied at 5A (2.5C) for 10 seconds.
(4) A resistance increase rate R₁ after high-temperature (65°C) intermittent cycle was calculated through the following formula: Resistance increase rate R1 (%) after high-temperature (65°C) intermittent cycle = { (resistance after 80 cycles - initial resistance)/initial resistance} × 100.

### Resistance increase rate after fast-charge (6C) cycle

(1) Test of initial resistance: The lithium-ion battery was transferred to a charging and discharging apparatus at room temperature (25°C), then charged to 4.45 V at a constant current of 0.33C, and then charged to a cut-off current of 0.05C at a constant voltage of 4.45 V, and discharged to 3.0 V at 0.33C. Then, after three charge and discharge cycles were performed, based on a discharge capacity of the last cycle, the battery was set to SOC 50%. Then, a direct-current internal resistance (a PNE-0506 charging and discharging apparatus) was measured through voltage drop displayed after a discharge pulse was applied at 5A (2.5C) for 10 seconds, and the resistance at that time point was defined as the initial resistance.
(2) Fast-charge cycle: The lithium-ion battery was charged to a voltage of 4.25 V at a constant current of 6C (nominal capacity) and then charged to a current of 0.05C at a constant voltage of 4.25 V. Then, after left standing for 10 min, the battery was discharged to a cut-off voltage of 2.8 V at a constant current of 1C. The above charge and discharge process was set as one cycle. A total of 80 charge and discharge cycles were performed.
(3) Resistance after fast-charge cycle: The SOC was set to 50%. Then, the resistance after 80 cycles was measured using the PNE-0506 charging and discharging apparatus through voltage drop displayed after the discharge pulse was applied at 5A (2.5C) for 10 seconds.
(4) A resistance increase rate R₂ after fast-charge (6C) cycle was calculated through the following formula: Resistance increase rate R2 (%) after fast-charge (6C) cycle = {(resistance after 80 cycles - initial resistance)/initial resistance} × 100.

### Energy density ED

The lithium-ion battery in each of the examples and comparative examples was left standing in a thermostatic chamber at 25°C±1°C for 30 minutes, charged to 4.45 V at a constant current of 0.5C, then charged to 0.025C at a constant voltage of 4.45 V, left standing for 5 minutes, and then discharged to 3.0 V at 0.5C. Discharge energy E mAh of the lithium-ion battery was recorded, and the length, width, and height of the battery at 50% state of charge (the lithium-ion battery was charged to 3.95 V at a constant current of 0.5C) to obtain the volume V cm³ of the battery. The energy density ED = E/V.

### Average particle size D µm of silicon-based particles

The negative electrode plate was cut into to a size of 1 cm × 1 cm, and then a cut surface of the negative electrode plate was polished using an argon plasma polishing technology (CP) to prepare a CP sample.

The CP sample was observed with a scanning electron microscope, the silicon-based particles in the CP sample were selected, the cross-sectional areas of the silicon-based particles were counted and recorded as S, and R was calculated according to the formula S = πR². The particle size of the silicon-based particles was 2R.

A total of 20 silicon-based particles were randomly selected. An arithmetic mean value of the particle sizes of 20 silicon-based particles was calculated and recorded as the average particle size D µm of the silicon-based particles.

### Thickness T µm of negative electrode mixture layer

The negative electrode plate was cut into to a size of 1 cm × 1 cm, and then a cut surface of the negative electrode plate was polished using an argon plasma polishing technology (CP) to prepare a CP sample.

The CP sample was observed with a scanning electron microscope, the thicknesses of the negative electrode mixture layers on two surfaces of the current collector were measured respectively, and an arithmetic mean value of the two thicknesses was calculated to obtain the thickness T µm of the negative electrode mixture layer.

### Example 1-1

### <Preparation of negative electrode>

### Preparation of negative electrode plate

Silicon-based particles and artificial graphite were mixed well at a mass ratio of 12:88, and the resulting mixture served as a negative electrode active material. The above negative electrode active material, styrene-butadiene rubber (SBR), polyacrylic acid (PAA), carbon nanotubes, and carboxymethyl cellulose were mixed at a mass ratio of 95.8:2.4:0.5:0.5:0.8, then deionized water was added and stirred well to prepare a negative electrode slurry with a solid content of 45wt%. The negative electrode slurry was evenly applied onto one surface of a copper foil with a thickness of 6 µm. After drying was performed, a negative electrode plate with a negative electrode mixture layer applied onto one surface was obtained. The above steps were repeated on another surface of the copper foil to obtain a negative electrode plate with negative electrode mixture layers applied onto two surfaces. After cold pressing, cutting, slitting, and drying were performed, a negative electrode plate with a size of 76.6 mm × 875 mm was obtained.

### <Preparation of positive electrode>

Lithium cobaltate, conductive carbon black, and polyvinylidene fluoride were mixed at a mass ratio of 95:2:3, and N-methylpyrrolidone was added and stirred well to obtain a positive electrode slurry with a solid content of 70wt%. The positive electrode slurry was evenly applied onto one surface of an aluminum foil with a thickness of 9 µm. After drying was performed, a positive electrode plate with a positive electrode mixture layer applied onto one surface was obtained. The above steps were repeated on another surface of the aluminum foil to obtain a positive electrode plate with positive electrode mixture layers applied onto two surfaces. After drying, cold pressing, cutting, and slitting were performed, and then drying was performed to obtain a positive electrode plate with a size of 74 mm × 867 mm.

### <Preparation of electrolyte>

In a dry argon atmosphere glove box, lithium hexafluorophosphate (LiPF₆) was dissolved in a mixed solution containing diethyl carbonate (DEC), ethylene carbonate (EC), propylene carbonate (PC), ethyl propionate (EP), propyl propionate (PP), a dinitrile compound, a trinitrile compound, and fluoroethylene carbonate (FEC). Based on a mass of the electrolyte, the content of LiPF₆ was 12%, and the percentages of other substances were shown in Table 1, with the remainder being DEC.

The dinitrile compound included succinonitrile and adiponitrile, and based on the mass of the electrolyte, a percentage ratio of the succinonitrile to the adiponitrile was 11:10.

### The trinitrile compound was 1,3,6-hexanetricarbonitrile.

### <Separator>

A porous polyethylene film (provided by Celgard) with a thickness of 15 µm was used as a separator.

### <Preparation of lithium-ion battery>

The positive electrode and negative electrode prepared as described above were connected to tabs respectively, and stacked with the separator to obtain a resulting stack. Then, the resulting stack and the electrolyte were stored in an aluminum laminated enclosure. An opening of the enclosure was thermally sealed, and the steps such as formation and capacity test were performed to prepare a lithium-ion battery.

The examples and comparative examples in Table 1 were the same as Example 1-1, except that the parameters shown in Table 1 and the types of the following dinitrile compound and trinitrile compound were adjusted.

### Examples 1-19 to 1-26

The dinitrile compound included succinonitrile and 1,2-bis(2-cyanoethoxy)ethane, and based on the mass of the electrolyte, a percentage ratio of succinonitrile to 1,2-bis(2-cyanoethoxy)ethane was 11:10.

### Examples 1-27 to 1-35

The dinitrile compound included adiponitrile and 1,2-bis(2-cyanoethoxy)ethane, and based on the mass of the electrolyte, a percentage ratio of adiponitrile to 1,2-bis(2-cyanoethoxy)ethane was 11:10.

### Examples 1-36 to 1-52

The trinitrile compound included 1,3,6-hexanetricarbonitrile and 4-(2-cyanoethyl)heptanedinitrile, and based on the mass of the electrolyte, a percentage ratio of 1,3,6-hexanetricarbonitrile to 4-(2-cyanoethyl)heptanedinitrile was 11:10.

### Examples 1-53 to 1-70

The dinitrile compound included adiponitrile and 1,2-bis(2-cyanoethoxy)ethane, and based on the mass of the electrolyte, the percentage ratio of adiponitrile to 1,2-bis(2-cyanoethoxy)ethane was 11:10. The trinitrile compound included 1,3,6-hexanetricarbonitrile and 4-(2-cyanoethyl)heptanedinitrile, and based on the mass of the electrolyte, the percentage ratio of 1,3,6-hexanetricarbonitrile to 4-(2-cyanoethyl)heptanedinitrile was 11:10.

**Table 1**

| | T (µm) | D (µm) | 10T/D² | Dinitrile N₁ (%) | Trinitrile N₂ (%) | N₁/N₂ | EC X₁ (%) | PC X₂ (%) | X₁ + X₂ | X₂/X₁ | EP Y₁ (%) | PP Y₂ (%) | Y₁ + Y₂ | Y₂/Y₁ | Fluorobenzene F₁ (%) | FEC F₂ (%) | R₁ (%) | R₂ (%) | ED (mAh/cm³) |
|---|---|---|---|---|---|---|---|---|---|---|---|---|---|---|---|---|---|---|---|
| Comparative example 1 | 53.3 | 13.4 | 3.0 | 3.0 | 1.5 | 2.0 | 13 | 13 | 26 | 1.0 | 16 | 16 | 32 | 1.0 | \ | 5.0 | 25.6 | 30.7 | 721 |
| Comparative example 2 | 135.6 | 7.2 | 26.2 | 3.0 | 1.5 | 2.0 | 13 | 13 | 26 | 1.0 | 16 | 16 | 32 | 1.0 | \ | 5.0 | 26.2 | 30.5 | 721 |
| Comparative example 3 | 87.4 | 9.6 | 9.5 | 3.0 | \ | \ | 13 | 13 | 26 | 1.0 | 16 | 16 | 32 | 1.0 | \ | 5.0 | 25.9 | 32.4 | 721 |
| Comparative example 4 | 87.4 | 9.6 | 9.5 | \ | 1.5 | \ | 13 | 13 | 26 | 1.0 | 16 | 16 | 32 | 1.0 | \ | 5.0 | 26.8 | 31.8 | 721 |
| Comparative example 5 | 87.4 | \ | / | 3.0 | 1.5 | 2.0 | 13 | 13 | 26 | 1.0 | 16 | 16 | 32 | 1.0 | \ | 5.0 | 21.3 | 26.8 | 645 |
| Example 1-1 | 87.4 | 9.6 | 9.5 | 3.0 | 1.5 | 2.0 | 13 | 13 | 26 | 1.0 | 16 | 16 | 32 | 1.0 | \ | 5.0 | 17.9 | 23.4 | 721 |
| Example 1-2 | 60.2 | 12.7 | 3.7 | 3.0 | 1.5 | 2.0 | 13 | 13 | 26 | 1.0 | 16 | 16 | 32 | 1.0 | \ | 5.0 | 20.1 | 25.1 | 721 |
| Example 1-3 | 78.2 | 10.9 | 6.6 | 3.0 | 1.5 | 2.0 | 13 | 13 | 26 | 1.0 | 16 | 16 | 32 | 1.0 | \ | 5.0 | 18.4 | 24.6 | 721 |
| Example 1-4 | 80.1 | 10.7 | 7.0 | 3.0 | 1.5 | 2.0 | 13 | 13 | 26 | 1.0 | 16 | 16 | 32 | 1.0 | \ | 5.0 | 17.5 | 24.1 | 721 |
| Example 1-5 | 82.9 | 10.6 | 7.4 | 3.0 | 1.5 | 2.0 | 13 | 13 | 26 | 1.0 | 16 | 16 | 32 | 1.0 | \ | 5.0 | 17.0 | 22.5 | 721 |
| Example 1-6 | 98.7 | 9.2 | 11.7 | 3.0 | 1.5 | 2.0 | 13 | 13 | 26 | 1.0 | 16 | 16 | 32 | 1.0 | \ | 5.0 | 16.9 | 22.8 | 721 |
| Example 1-7 | 112.9 | 7.9 | 18.1 | 3.0 | 1.5 | 2.0 | 13 | 13 | 26 | 1.0 | 16 | 16 | 32 | 1.0 | \ | 5.0 | 16.7 | 23.0 | 721 |
| Example 1-8 | 108.3 | 7.6 | 18.8 | 3.0 | 1.5 | 2.0 | 13 | 13 | 26 | 1.0 | 16 | 16 | 32 | 1.0 | \ | 5.0 | 17.6 | 23.8 | 721 |
| Example 1-9 | 121.8 | 7.0 | 24.9 | 3.0 | 1.5 | 2.0 | 13 | 13 | 26 | 1.0 | 16 | 16 | 32 | 1.0 | \ | 5.0 | 19.2 | 25.3 | 721 |
| Example 1-10 | 89.4 | 9.4 | 10.1 | 2.8 | 3.5 | 0.8 | 15 | 15 | 30 | 1.0 | 19 | 19 | 38 | 1.0 | \ | 5.0 | 16.4 | 22.1 | 744 |
| Example 1-11 | 89.4 | 9.4 | 10.1 | 3.2 | 2.9 | 1.1 | 15 | 15 | 30 | 1.0 | 19 | 19 | 38 | 1.0 | \ | 5.0 | 15.1 | 20.4 | 744 |
| Example 1-12 | 89.4 | 9.4 | 10.1 | 4.2 | 2.5 | 1.7 | 15 | 15 | 30 | 1.0 | 19 | 19 | 38 | 1.0 | \ | 5.0 | 14.1 | 18.2 | 744 |
| Example 1-13 | 89.9 | 9.4 | 10.2 | 4.9 | 2.2 | 2.2 | 15 | 15 | 30 | 1.0 | 19 | 19 | 38 | 1.0 | \ | 5.0 | 12.9 | 17.3 | 744 |
| Example 1-14 | 89.9 | 9.4 | 10.2 | 5.2 | 1.8 | 2.9 | 15 | 15 | 30 | 1.0 | 19 | 19 | 38 | 1.0 | \ | 5.0 | 13.1 | 17.1 | 744 |
| Example 1-15 | 89.9 | 9.4 | 10.2 | 5.6 | 1.7 | 3.3 | 15 | 15 | 30 | 1.0 | 19 | 19 | 38 | 1.0 | \ | 5.0 | 13.3 | 16.9 | 744 |
| Example 1-16 | 89.4 | 9.4 | 10.1 | 5.9 | 1.6 | 3.7 | 15 | 15 | 30 | 1.0 | 19 | 19 | 38 | 1.0 | \ | 5.0 | 13.3 | 17.0 | 744 |
| Example 1-17 | 89.4 | 9.4 | 10.1 | 6.8 | 1.4 | 4.9 | 15 | 15 | 30 | 1.0 | 19 | 19 | 38 | 1.0 | \ | 5.0 | 15.5 | 20.7 | 744 |
| Example 1-18 | 89.4 | 9.4 | 10.1 | 7.1 | 1.1 | 6.5 | 15 | 15 | 30 | 1.0 | 19 | 19 | 38 | 1.0 | \ | 5.0 | 16.3 | 22.3 | 744 |
| Example 1-19 | 92.6 | 8.6 | 12.5 | 4.8 | 2.1 | 2.3 | 13 | 12 | 25 | 0.9 | 9 | 12 | 21 | 1.3 | \ | 5.0 | 13.6 | 18.4 | 721 |
| Example 1-20 | 92.6 | 8.6 | 12.5 | 4.8 | 2.1 | 2.3 | 15 | 14 | 29 | 0.9 | 9 | 12 | 21 | 1.3 | \ | 5.0 | 12.4 | 17.9 | 721 |
| Example 1-21 | 92.6 | 8.6 | 12.5 | 4.8 | 2.1 | 2.3 | 14 | 20 | 34 | 1.4 | 9 | 12 | 21 | 1.3 | \ | 5.0 | 11.0 | 13.9 | 721 |
| Example 1-22 | 92.6 | 8.6 | 12.5 | 4.8 | 2.1 | 2.3 | 20 | 19 | 39 | 1.0 | 9 | 12 | 21 | 1.3 | \ | 5.0 | 12.1 | 15.1 | 721 |
| Example 1-23 | 92.6 | 8.6 | 12.5 | 4.8 | 2.1 | 2.3 | 20 | 26 | 46 | 1.3 | 9 | 12 | 21 | 1.3 | \ | 5.0 | 11.3 | 14.4 | 721 |
| Example 1-24 | 92.6 | 8.6 | 12.5 | 4.8 | 2.1 | 2.3 | 25 | 26 | 51 | 1.0 | 9 | 12 | 21 | 1.3 | \ | 5.0 | 13.0 | 17.4 | 721 |
| Example 1-25 | 92.6 | 8.6 | 12.5 | 4.8 | 2.1 | 2.3 | 27 | 27 | 54 | 1.0 | 9 | 12 | 21 | 1.3 | \ | 5.0 | 14.3 | 18.5 | 721 |
| Example 1-26 | 89.4 | 9.4 | 10.1 | 2.8 | 3.5 | 0.8 | 19 | 21 | 40 | 1.1 | 9 | 12 | 21 | 1.3 | \ | 5.0 | 15.6 | 21.9 | 744 |
| Example 1-27 | 94.7 | 8.2 | 14.1 | 5.4 | 2.0 | 2.7 | 20 | 20 | 40 | 1.0 | 9 | 12 | 21 | 1.3 | \ | 5.0 | 12.0 | 15.5 | 729 |
| Example 1-28 | 94.7 | 8.2 | 14.1 | 5.4 | 2.0 | 2.7 | 19 | 21 | 40 | 1.1 | 9 | 12 | 21 | 1.3 | \ | 5.0 | 10.8 | 14.8 | 729 |
| Example 1-29 | 94.7 | 8.2 | 14.1 | 5.4 | 2.0 | 2.7 | 15 | 25 | 40 | 1.7 | 9 | 12 | 21 | 1.3 | \ | 5.0 | 10.5 | 13.4 | 729 |
| Example 1-30 | 94.7 | 8.2 | 14.1 | 5.4 | 2.0 | 2.7 | 12 | 26 | 38 | 2.2 | 9 | 12 | 21 | 1.3 | \ | 5.0 | 10.3 | 13.7 | 729 |
| Example 1-31 | 94.7 | 8.2 | 14.1 | 5.4 | 2.0 | 2.7 | 11 | 27 | 38 | 2.5 | 9 | 12 | 21 | 1.3 | \ | 5.0 | 11.0 | 14.6 | 729 |
| Example 1-32 | 94.7 | 8.2 | 14.1 | 5.4 | 2.0 | 2.7 | 10 | 28 | 38 | 2.8 | 9 | 12 | 21 | 1.3 | \ | 5.0 | 11.8 | 16.4 | 729 |
| Example 1-33 | 94.7 | 8.2 | 14.1 | 5.4 | 2.0 | 2.7 | 17 | 32 | 49 | 1.9 | 9 | 12 | 21 | 1.3 | \ | 5.0 | 10.9 | 14.4 | 729 |
| Example 1-34 | 94.7 | 8.2 | 14.1 | 5.4 | 2.0 | 2.7 | 24 | 25 | 49 | 1.0 | 9 | 12 | 21 | 1.3 | \ | 5.0 | 11.3 | 14.5 | 729 |
| Example 1-35 | 89.4 | 9.4 | 10.1 | 2.8 | 3.5 | 0.8 | 16 | 28 | 44 | 1.8 | 9 | 12 | 21 | 1.3 | \ | 5.0 | 15.1 | 20.9 | 744 |
| Example 1-36 | 93.4 | 8.9 | 11.8 | 5.8 | 1.7 | 3.4 | 4 | 6 | 10 | 1.5 | 13 | 17 | 30 | 1.3 | \ | 5.0 | 13.1 | 17.2 | 721 |
| Example 1-37 | 93.4 | 8.9 | 11.8 | 5.8 | 1.7 | 3.4 | 4 | 6 | 10 | 1.5 | 15 | 20 | 35 | 1.3 | \ | 5.0 | 11.9 | 15.7 | 721 |
| Example 1-38 | 93.4 | 8.9 | 11.8 | 5.8 | 1.7 | 3.4 | 4 | 6 | 10 | 1.5 | 18 | 23 | 41 | 1.3 | \ | 5.0 | 11.1 | 14.7 | 721 |
| Example 1-39 | 93.4 | 8.9 | 11.8 | 5.8 | 1.7 | 3.4 | 4 | 6 | 10 | 1.5 | 25 | 30 | 55 | 1.2 | \ | 5.0 | 10.9 | 14.9 | 721 |
| Example 1-40 | 93.4 | 8.9 | 11.8 | 5.8 | 1.7 | 3.4 | 4 | 6 | 10 | 1.5 | 28 | 34 | 62 | 1.2 | \ | 5.0 | 12.3 | 15.9 | 721 |
| Example 1-41 | 93.4 | 8.9 | 11.8 | 5.8 | 1.7 | 3.4 | 4 | 6 | 10 | 1.5 | 28 | 36 | 64 | 1.3 | \ | 5.0 | 13.4 | 17.5 | 721 |
| Example 1-42 | 89.4 | 9.4 | 10.1 | 2.8 | 3.5 | 0.8 | 4 | 6 | 10 | 1.5 | 25 | 30 | 55 | 1.2 | \ | 5.0 | 15.8 | 21.4 | 744 |
| Example 1-43 | 90.1 | 8.2 | 13.4 | 4.5 | 1.8 | 2.5 | 9 | 15 | 24 | 1.7 | 25 | 25 | 50 | 1.0 | \ | 5.0 | 11.4 | 14.8 | 721 |
| Example 1-44 | 90.1 | 8.2 | 13.4 | 4.5 | 1.8 | 2.5 | 9 | 15 | 24 | 1.7 | 20 | 24 | 44 | 1.2 | \ | 5.0 | 10.7 | 13.0 | 721 |
| Example 1-45 | 90.1 | 8.2 | 13.4 | 4.5 | 1.8 | 2.5 | 9 | 15 | 24 | 1.7 | 20 | 30 | 50 | 1.5 | \ | 5.0 | 10.1 | 12.1 | 721 |
| Example 1-46 | 90.1 | 8.2 | 13.4 | 4.5 | 1.8 | 2.5 | 9 | 15 | 24 | 1.7 | 13 | 32 | 45 | 2.5 | \ | 5.0 | 9.8 | 12.7 | 721 |
| Example 1-47 | 90.1 | 8.2 | 13.4 | 4.5 | 1.8 | 2.5 | 9 | 15 | 24 | 1.7 | 13 | 37 | 50 | 2.8 | \ | 5.0 | 10.5 | 13.4 | 721 |
| Example 1-48 | 90.1 | 8.2 | 13.4 | 4.5 | 1.8 | 2.5 | 9 | 15 | 24 | 1.7 | 13 | 34 | 47 | 2.6 | \ | 5.0 | 11.3 | 14.7 | 721 |
| Example 1-49 | 89.4 | 9.4 | 10.1 | 2.8 | 3.5 | 0.8 | 9 | 15 | 24 | 1.7 | 15 | 30 | 45 | 2.0 | \ | 5.0 | 14.6 | 19.2 | 744 |
| Example 1-50 | 89.4 | 9.4 | 10.1 | 2.8 | 3.5 | 0.8 | 17 | 18 | 35 | 1.1 | 18 | 22 | 40 | 1.2 | \ | 5.0 | 15.7 | 21.4 | 744 |
| Example 1-51 | 89.4 | 9.4 | 10.1 | 2.8 | 3.5 | 0.8 | 10 | 19 | 29 | 1.9 | 15 | 28 | 43 | 1.9 | \ | 5.0 | 13.9 | 18.9 | 744 |
| Example 1-52 | 89.4 | 9.4 | 10.1 | 5.2 | 1.8 | 2.9 | 11 | 21 | 32 | 1.9 | 14 | 28 | 42 | 2.0 | \ | 5.0 | 10.0 | 12.2 | 744 |
| Example 1-53 | 89.4 | 9.4 | 10.1 | 4.6 | 1.8 | 2.6 | 11 | 20 | 31 | 1.8 | 14 | 27 | 41 | 1.9 | 0.5 | 5.0 | 9.4 | 11.8 | 744 |
| Example 1-54 | 89.4 | 9.4 | 10.1 | 4.6 | 1.8 | 2.6 | 11 | 20 | 31 | 1.8 | 14 | 27 | 41 | 1.9 | 0.9 | 5.0 | 8.8 | 10.5 | 744 |
| Example 1-55 | 89.4 | 9.4 | 10.1 | 4.6 | 1.8 | 2.6 | 11 | 20 | 31 | 1.8 | 14 | 27 | 41 | 1.9 | 2.7 | 5.0 | 8.2 | 10.1 | 744 |
| Example 1-56 | 89.4 | 9.4 | 10.1 | 4.6 | 1.8 | 2.6 | 11 | 20 | 31 | 1.8 | 14 | 27 | 41 | 1.9 | 3.4 | 5.0 | 8.4 | 9.9 | 744 |
| Example 1-57 | 89.4 | 9.4 | 10.1 | 4.6 | 1.8 | 2.6 | 11 | 20 | 31 | 1.8 | 14 | 27 | 41 | 1.9 | 4.1 | 5.0 | 8.7 | 11.0 | 744 |
| Example 1-58 | 89.4 | 9.4 | 10.1 | 4.6 | 1.8 | 2.6 | 11 | 20 | 31 | 1.8 | 14 | 27 | 41 | 1.9 | 4.5 | 5.0 | 9.1 | 11.9 | 744 |
| Example 1-59 | 89.4 | 9.4 | 10.1 | 2.8 | 3.5 | 0.8 | 10 | 15 | 25 | 1.5 | 13 | 32 | 45 | 2.5 | 2.9 | 5.0 | 13.5 | 19.0 | 744 |
| Example 1-60 | 89.4 | 9.4 | 10.1 | 2.8 | 3.5 | 0.8 | 11 | 20 | 31 | 1.8 | 18 | 20 | 38 | 1.1 | 3.1 | 5.0 | 14.9 | 21.1 | 744 |
| Example 1-61 | 89.4 | 9.4 | 10.1 | 5.4 | 2.0 | 2.7 | 15 | 25 | 40 | 1.7 | 9 | 12 | 21 | 1.3 | 3.0 | 5.0 | 9.7 | 11.3 | 729 |
| Example 1-62 | 93.2 | 8.9 | 11.8 | 4.7 | 1.8 | 2.6 | 8 | 13 | 21 | 1.6 | 16 | 19 | 35 | 1.2 | 2.7 | 8.5 | 9.8 | 12.0 | 744 |

| | T (µm) | D (µm) | 10T/D² | Dinitrile N₁ (%) | Trinitrile N₂ (%) | N₁/N₂ | EC X₁ (%) | PC X₂ (%) | X₁ + X₂ | X₂/X₁ | EP Y₁ (%) | PP Y₂ (%) | Y₁ + Y₂ | Y₂/Y₁ | Fluorobenzene F₁ (%) | FEC F₂ (%) | R₁ (%) | R₂ (%) | ED (mAh/cm³) |
|---|---|---|---|---|---|---|---|---|---|---|---|---|---|---|---|---|---|---|---|
| Example 1-63 | 93.2 | 8.9 | 11.8 | 4.7 | 1.8 | 2.6 | 8 | 13 | 21 | 1.6 | 16 | 19 | 35 | 1.2 | 2.7 | 10.5 | 9.5 | 11.1 | 744 |
| Example 1-64 | 93.2 | 8.9 | 11.8 | 4.7 | 1.8 | 2.6 | 8 | 13 | 21 | 1.6 | 16 | 19 | 35 | 1.2 | 2.7 | 12.5 | 8.9 | 10.7 | 744 |
| Example 1-65 | 93.2 | 8.9 | 11.8 | 4.7 | 1.8 | 2.6 | 8 | 13 | 21 | 1.6 | 16 | 19 | 35 | 1.2 | 2.7 | 17.5 | 9.0 | 10.6 | 744 |
| Example 1-66 | 93.2 | 8.9 | 11.8 | 4.7 | 1.8 | 2.6 | 8 | 13 | 21 | 1.6 | 16 | 19 | 35 | 1.2 | 2.7 | 19.5 | 9.6 | 11.4 | 744 |
| Example 1-67 | 93.2 | 8.9 | 11.8 | 4.7 | 1.8 | 2.6 | 8 | 13 | 21 | 1.6 | 16 | 19 | 35 | 1.2 | 2.7 | 22.5 | 10.1 | 12.4 | 744 |
| Example 1-68 | 89.4 | 9.4 | 10.1 | 2.8 | 3.5 | 0.8 | 10 | 15 | 25 | 1.5 | 11 | 25 | 36 | 2.3 | 2.9 | 14.5 | 13.1 | 17.7 | 744 |
| Example 1-69 | 89.4 | 9.4 | 10.1 | 2.8 | 3.5 | 0.8 | 5 | 10 | 15 | 2.0 | 20 | 23 | 43 | 1.2 | 3.1 | 15.5 | 12.1 | 15.3 | 744 |
| Example 1-70 | 89.4 | 9.4 | 10.1 | 2.8 | 3.5 | 0.8 | 11 | 23 | 34 | 2.1 | 8 | 16 | 24 | 2.0 | 3.3 | 14.5 | 11.1 | 14.8 | 744 |

In Table 1, T (µm) represents the thickness of the negative electrode mixture layer, and D (µm) represents the average particle size of the silicon-based particles. Based on the mass of the electrolyte, N₁ (%) represents the mass percentage of the dinitrile compound, N₂ (%) represents the mass percentage of the trinitrile compound, X₁ (%) represents the mass percentage of EC, X₂ (%) represents the mass percentage of PC, Y₁ (%) represents the mass percentage of EP, Y₂ (%) represents the mass percentage of PP, F₁ (%) represents the mass percentage of fluorobenzene, and F₂ (%) represents the mass percentage of FEC.

It can be seen from Table 1 that in this application, the thickness T µm of the negative electrode mixture layer and the average particle size D µm of the silicon-based particles are adjusted to satisfy: 3.7 ≤ 10T/D² ≤ 24.9, with the combination of the dinitrile compound and trinitrile compound in the electrolyte, achieving a high energy density and reducing high-temperature intermittent cycle resistance increase rate and fast-charge cycle resistance increase rate. Especially, adjusting T and D to satisfy 7.0 ≤ 10T/D² ≤ 18.1 can further reduce the high-temperature intermittent cycle resistance increase rate and fast-charge cycle resistance increase rate of the lithium-ion battery.

Particularly, controlling the mass percentages of the dinitrile compound and trinitrile compound in the electrolyte to satisfy 1.1 ≤ N₁/N₂ ≤ 2.5 allows for a better match with the negative electrode system of this application and further reduces the high-temperature intermittent cycle resistance increase rate and fast-charge cycle resistance increase rate of the lithium-ion battery. Especially, under a condition of 2.2 ≤ N₁/N₂ ≤ 3.7, the high-temperature intermittent cycle resistance increase rate and fast-charge cycle resistance increase rate of the lithium-ion battery be significantly reduced.

Particularly, adjusting a sum of the mass percentages of the ethylene carbonate and propylene carbonate in the electrolyte to satisfy 29 ≤ X₁ + X₂ ≤ 51 and/or 1.1 ≤ X₂/X₁ ≤ 2.5 can reduce the high-temperature intermittent cycle resistance increase rate and fast-charge cycle resistance increase rate of the secondary battery. Further, adjusting the sum of the mass percentages of the two to satisfy 34 ≤ X₁ + X₂ ≤ 46 and/or 1.6 ≤ X₂/X₁ ≤ 2.2 allows the lithium-ion battery to have a lower high-temperature intermittent cycle resistance increase rate and fast-charge cycle resistance increase rate.

Particularly, controlling the mass percentages of the ethyl propionate and propyl propionate in the electrolyte to satisfy at least one of 35 ≤ Y₁ + Y₂ ≤ 62 or 1.2 ≤ Y₂/Y₁ ≤ 2.9 can reduce the high-temperature intermittent cycle resistance increase rate and fast-charge cycle resistance increase rate of the lithium-ion battery. Especially, when at least one of 41 ≤ Y₁ + Y₂ ≤ 55 or 1.5 ≤ Y₂/Y₁ ≤ 2.5 is satisfied, the high-temperature intermittent cycle resistance increase rate and fast-charge cycle resistance increase rate of the lithium-ion battery can be further reduced.

Particularly, the fluorine-containing compound including fluorobenzene and/or fluoroethylene carbonate is added into the electrolyte. Especially, controlling the mass percentages of the fluorobenzene and fluoroethylene carbonate in the electrolyte to satisfy 0.9 ≤ F₁ ≤ 4.1 and/or 10.5 ≤ F₂ ≤ 19.5 can improve the carbon nanotube adsorption capability of the generated solid electrolyte interface film and reduce the high-temperature intermittent cycle resistance increase rate and fast-charge cycle resistance increase rate of the lithium-ion battery. Further adjusting the mass percentages of the fluorobenzene and fluoroethylene carbonate in the electrolyte to satisfy 2.7 ≤ F₁ ≤ 3.4 and/or 12.5 ≤ F₂ ≤ 17.5 can significantly reduce the high-temperature intermittent cycle resistance increase rate and fast-charge cycle resistance increase rate of the lithium-ion battery.

The examples in Table 2 were the same as Example 1-1 except <preparation of electrolyte>.

### <Preparation of electrolyte> in the examples in Table 2 was as follows:

In a dry argon atmosphere glove box, lithium hexafluorophosphate (LiPF₆) was dissolved in a mixed solution containing ethylene carbonate, propylene carbonate, ethyl propionate, propyl propionate, a dinitrile compounds, a trinitrile compound, and fluoroethylene carbonate. Based on the mass of the electrolyte, a percentage of LiPF₆ was 12%, and the percentages of other substances were shown in Table 2, with the remainder being ethylene carbonate, propylene carbonate, ethyl propionate, and propyl propionate. Based on the mass of the electrolyte, a percentage ratio of ethylene carbonate, propylene carbonate, ethyl propionate, and propyl propionate was 1:2:1:2.

**Table 2**

| | A₁ (%) | A₂ (%) | A₁/ A₂ | B₁ (%) | B₂ (%) | B₁/ B₂ | F₁ (%) | F₂ (%) | H (%) | G (%) | R₁ (%) | R₂ (%) |
|---|---|---|---|---|---|---|---|---|---|---|---|---|
| Example 2-1 | 3.5 | 1.0 | 3.50 | 1.0 | 1.4 | 0.71 | 3.0 | 15.0 | \ | \ | 7.8 | 9.5 |
| Example 2-2 | 3.5 | 1.0 | 3.50 | 1.5 | 1.0 | 1.50 | 3.0 | 15.0 | \ | \ | 7.3 | 8.5 |
| Example 2-3 | 3.7 | 1.1 | 3.36 | 1.5 | 1.0 | 1.50 | 3.0 | 15.0 | \ | \ | 5.4 | 7.7 |
| Example 2-4 | 3.2 | 1.1 | 2.91 | 1.5 | 1.0 | 1.50 | 3.0 | 15.0 | \ | \ | 4.8 | 6.4 |
| Example 2-5 | 3.5 | 1.9 | 1.84 | 1.5 | 1.0 | 1.50 | 3.0 | 15.0 | \ | \ | 4.9 | 6.6 |
| Example 2-6 | 2.8 | 2.2 | 1.27 | 1.5 | 1.0 | 1.50 | 3.0 | 15.0 | \ | \ | 5.6 | 7.2 |
| Example 2-7 | 2.2 | 2.0 | 1.10 | 1.5 | 1.0 | 1.50 | 3.0 | 15.0 | \ | \ | 6.8 | 8.2 |
| Example 2-8 | 3.4 | 1.7 | 2.00 | 1.8 | 0.7 | 2.57 | 3.0 | 15.0 | \ | \ | 7.4 | 8.5 |
| Example 2-9 | 3.4 | 1.7 | 2.00 | 1.7 | 0.7 | 2.43 | 3.0 | 15.0 | \ | \ | 6.0 | 7.3 |
| Example 2-10 | 3.4 | 1.7 | 2.00 | 1.6 | 0.8 | 2.00 | 3.0 | 15.0 | \ | \ | 5.0 | 6.7 |
| Example 2-11 | 3.4 | 1.7 | 2.00 | 1.5 | 1.1 | 1.36 | 3.0 | 15.0 | \ | \ | 5.2 | 6.1 |
| Example 2-12 | 3.4 | 1.7 | 2.00 | 1.0 | 1.2 | 0.83 | 3.0 | 15.0 | \ | \ | 6.2 | 7.5 |
| Example 2-13 | 3.4 | 1.7 | 2.00 | 0.9 | 1.4 | 0.64 | 3.0 | 15.0 | \ | \ | 7.3 | 8.4 |
| Example 2-14 | 3.2 | 1.1 | 2.91 | 1.5 | 1.0 | 1.50 | 3.0 | 5.0 | \ | \ | 6.8 | 8.7 |
| Example 2-15 | 3.4 | 1.7 | 2.00 | 1.5 | 1.1 | 1.36 | 0.5 | 15.0 | \ | \ | 6.7 | 9.3 |
| Example 2-16 | 3.5 | 1.9 | 1.84 | 1.5 | 1.0 | 1.50 | 3.0 | 5.0 | \ | \ | 7.4 | 8.6 |
| Example 2-17 | 3.5 | 1.9 | 1.84 | 1.5 | 1.0 | 1.50 | 3.0 | 5.0 | 0.1 | \ | 6.9 | 8.8 |
| Example 2-18 | 3.5 | 1.9 | 1.84 | 1.5 | 1.0 | 1.50 | 3.0 | 5.0 | 0.2 | \ | 6.3 | 7.4 |
| Example 2-19 | 3.5 | 1.9 | 1.84 | 1.5 | 1.0 | 1.50 | 3.0 | 15.0 | 0.5 | \ | 4.5 | 5.0 |
| Example 2-20 | 3.5 | 1.9 | 1.84 | 1.5 | 1.0 | 1.50 | 3.0 | 5.0 | 0.9 | \ | 5.8 | 7.3 |
| Example 2-21 | 3.5 | 1.9 | 1.84 | 1.5 | 1.0 | 1.50 | 3.0 | 5.0 | 1.0 | \ | 7.3 | 9.0 |
| Example 2-22 | 3.5 | 1.9 | 1.84 | 1.5 | 1.0 | 1.50 | 3.0 | 5.0 | \ | 0.1 | 7.4 | 9.1 |
| Example 2-23 | 3.5 | 1.9 | 1.84 | 1.5 | 1.0 | 1.50 | 3.0 | 5.0 | \ | 0.2 | 6.2 | 7.7 |
| Example 2-24 | 3.5 | 1.9 | 1.84 | 1.5 | 1.0 | 1.50 | 3.0 | 15.0 | \ | 0.4 | 4.4 | 5.3 |
| Example 2-25 | 3.5 | 1.9 | 1.84 | 1.5 | 1.0 | 1.50 | 3.0 | 5.0 | \ | 0.7 | 6.3 | 7.6 |
| Example 2-26 | 3.5 | 1.9 | 1.84 | 1.5 | 1.0 | 1.50 | 3.0 | 5.0 | \ | 0.9 | 7.6 | 8.9 |

In Table 2, based on the mass of the electrolyte, A₁ (%) represents the mass percentage of succinonitrile, A₂ (%) represents the mass percentage of adiponitrile, B₁ (%) represents the mass percentage of 1,2-bis(2-cyanoethoxy)ethane, B₂ (%) represents the mass percentage of 1,3,6-hexanetricarbonitrile, F₁ (%) represents the mass percentage of fluorobenzene, F₂ (%) represents the mass percentage of fluoroethylene carbonate, H (%) represents the mass percentage of the compound of formula I, and G (%) represents the mass percentage of the compound of formula II.

It can be seen from Table 2 that in this application, controlling the electrolyte to include succinonitrile and adiponitrile and adjusting the mass percentages of the succinonitrile and adiponitrile to satisfy 1.27 ≤ A₁/A₂ ≤ 3.36 can reduce the high-temperature intermittent cycle resistance increase rate and fast-charge cycle resistance increase rate of the lithium-ion battery. Especially, when 1.84 ≤ A₁/A₂ ≤ 2.91 is satisfied, the high-temperature intermittent cycle resistance increase rate and fast-charge cycle resistance increase rate of the lithium-ion battery can be significantly reduced.

Particularly, the electrolyte of this application includes 1,2-bis(2-cyanoethoxy)ethane and 1,3,6-hexanetricarbonitrile, and the mass percentages of 1,2-bis(2-cyanoethoxy)ethane and 1,3,6-hexanetricarbonitrile are adjusted to satisfy 0.83 ≤ B₁/B₂ ≤ 2.43, so that the high-temperature intermittent cycle resistance increase rate and fast-charge cycle resistance increase rate of the secondary battery can be reduced. When the relationship between the two is preferably 1.36 ≤ B₁/B₂ ≤ 2.00, the high-temperature intermittent cycle resistance increase rate and fast-charge cycle resistance increase rate of the lithium-ion battery can be further reduced.

Particularly, when the compound of formula I is added into the electrolyte and its mass percentage in the electrolyte is adjusted to satisfy 0.2 ≤ H ≤ 0.9, the high-temperature intermittent cycle resistance increase rate and the fast-charge cycle resistance increase rate can be further reduced. In addition, the compound of formula II is added into the electrolyte and its mass percentage in the electrolyte is adjusted to satisfy 0.2 ≤ G ≤ 0.7, the high-temperature intermittent cycle resistance increase rate and fast-charge cycle resistance increase rate of the lithium-ion battery can be significantly reduced.

Although illustrative embodiments have been demonstrated and described, persons skilled in the art should understand that the foregoing embodiments should not be construed as limitations on this application, and that these embodiments may be changed, replaced, and modified without departing from the principle and scope of this application.

## Claims

1. A secondary battery, comprising a positive electrode, a negative electrode, and an electrolyte; wherein the negative electrode comprises a negative electrode current collector and a negative electrode mixture layer disposed on at least one surface of the negative electrode current collector, **characterized in that**, a thickness of the negative electrode mixture layer is T µm, the negative electrode mixture layer contains carbon nanotubes and silicon-based particles, an average particle size of the silicon-based particles is D µm, and 3.7 ≤ 10T/D²≤ 24.9; and
the electrolyte comprises a dinitrile compound and a trinitrile compound.

2. The secondary battery according to claim 1, **characterized in that**, the dinitrile compound comprises at least one selected from the group consisting of malononitrile, succinonitrile, glutaronitrile, adiponitrile, pimelonitrile, suberonitrile, 3,3'-oxydipropionitrile, hex-2-enedinitrile, fumaronitrile, 2-pentenedinitrile, methylglutaronitrile, (Z)-but-2-enedinitrile, 2,2,3,3-tetrafluorosuccinonitrile, and 1,2-bis(2-cyanoethoxy)ethane.

3. The secondary battery according to claim 1 or 2, **characterized in that**, the trinitrile compound comprises at least one selected from the group consisting of 1,3,6-hexanetricarbonitrile, 1,3,5-pentanetricarbonitrile, 4-(2-cyanoethyl)heptanedinitrile, and 1,2,3-tris(2-cyanoethoxy)propane.

4. The secondary battery according to any one of claims 1 to 3, **characterized in that**, based on a mass of the electrolyte, a mass percentage of the dinitrile compound is N₁%, a mass percentage of the trinitrile compound is N₂%, and 1.1 ≤ N₁/N₂ ≤ 4.9.

5. The secondary battery according to any one of claims 1 to 4, **characterized in that**, the secondary battery satisfies at least one of the following:
(1) 7.0 ≤ 10T/D² ≤ 18.1;
(2) 60 ≤ T ≤ 122; or
(3) 7.0 ≤ D ≤ 12.7.

6. The secondary battery according to claim 4, **characterized in that**, the secondary battery satisfies at least one of the following:
(1) 3.2 ≤ N₁ ≤ 6.8;
(2) 1.4 ≤ N₂ ≤ 2.9; or
(3) 2.2 ≤ N₁/N₂ ≤ 3.7.

7. The secondary battery according to any one of claims 1 to 6, **characterized in that**, the electrolyte satisfies at least one of the following:
(1) the electrolyte comprises succinonitrile and adiponitrile, wherein based on a mass of the electrolyte, a mass percentage of the succinonitrile is A₁%, a mass percentage of the adiponitrile is A₂%, and 1.27 ≤ A₁/A₂ ≤ 3.36; or
(2) the electrolyte comprises 1,2-bis(2-cyanoethoxy)ethane and 1,3,6-hexanetricarbonitrile; wherein based on a mass of the electrolyte, a mass percentage of the 1,2-bis(2-cyanoethoxy)ethane is B₁%, a mass percentage of 1,3,6-hexanetricarbonitrile is B₂%, and 0.83 ≤ B₁/B₂ ≤ 2.43.

8. The secondary battery according to claim 7, **characterized in that**, the electrolyte satisfies at least one of the following:
(1) 2.8 ≤ A₁ ≤ 3.7;
(2) 1.1 ≤ A₂ ≤ 2.2;
(3) 1.0 ≤ B₁ ≤ 1.7;
(4) 0.7 ≤ B₂ ≤ 1.2;
(5) 1.84 ≤ A₁/A₂ ≤ 2.91; or
(6) 1.36 ≤ B₁/B₂ ≤ 2.00.

9. The secondary battery according to any one of claims 1 to 8, **characterized in that**, the electrolyte comprises ethylene carbonate and propylene carbonate; wherein based on a mass of the electrolyte, a mass percentage of the ethylene carbonate is X₁%, and a mass percentage of the propylene carbonate is X₂%; and the electrolyte satisfies at least one of the following:
(1) 29 ≤ X₁ + X₂ ≤ 51; or
(2) 1.1 ≤ X₂/X₁ ≤ 2.5.

10. The secondary battery according to claim 9, **characterized in that**, the electrolyte satisfies at least one of the following:
(1) 34 ≤ X₁ + X₂ ≤ 46; or
(2) 1.6 ≤ X₂/X₁ ≤ 2.2.

11. The secondary battery according to any one of claims 1 to 10, **characterized in that**, the electrolyte comprises ethyl propionate and propyl propionate; wherein based on a mass of the electrolyte, a mass percentage of the ethyl propionate is Y₁%, and a mass percentage of the propyl propionate is Y₂%; and the electrolyte satisfies at least one of the following:
(1) 35 ≤ Y₁ + Y₂ ≤ 62; or
(2) 1.2 ≤ Y₂/Y₁ ≤ 2.9.

12. The secondary battery according to claim 11, **characterized in that**, the electrolyte satisfies at least one of the following:
(1) 41 ≤ Y₁ + Y₂ ≤ 55; or
(2) 1.5 ≤ Y₂/Y₁ ≤ 2.5.

13. The secondary battery according to any one of claims 1 to 12, **characterized in that**, the electrolyte comprises a fluorine-containing compound; the fluorine-containing compound comprises at least one of fluorobenzene or fluoroethylene carbonate; and based on a mass of the electrolyte, the electrolyte satisfies at least one of the following:
(1) a mass percentage of the fluorobenzene is F₁%, wherein 0.9 ≤ F₁ ≤ 4.1; or
(2) a mass percentage of the fluoroethylene carbonate is F₂%, wherein 10.5 ≤ F₂ ≤ 19.5.

14. The secondary battery according to claim 13, **characterized in that**, the electrolyte satisfies at least one of the following:
(1) 2.7 ≤ F₁ ≤ 3.4; or
(2) 12.5 ≤ F₂ ≤ 17.5.

15. An electronic device, comprising the secondary battery according to any one of claims 1 to 14.
